# EUROPEAN PATENT APPLICATION

(11) **EP 4 414 413 A1**
(43) Date of publication of application: **14.08.2024**
(21) Application number: 22878416.1
(22) Date of filing: 29.09.2022
(51) Int. Cl.: C08J 5/04, B32B 5/00, B32B 5/28, B32B 27/08, C08J 5/24, C08K 7/06, C08L 63/00, C08L 101/12

(54) **PREPREG, FIBER-REINFORCED RESIN MOLDED ARTICLE, AND INTEGRATED MOLDED ARTICLE**

(30) Priority: 06.10.2021 JP 2021164556; 06.10.2021 JP 2021164557; 06.10.2021 JP 2021164558
(71) Applicant: Toray Industries, Inc., Tokyo 103-8666 (JP)
(72) Inventor: KOBAYASHI, Hiroshi, Iyo-gun, Ehime 791-3193 (JP); HONMA, Masato, Iyo-gun, Ehime 791-3193 (JP); SHINOHARA, Kotaro, Iyo-gun, Ehime 791-3193 (JP); HANABUSA, Hideki, Iyo-gun, Ehime 791-3193 (JP)
(74) Representative: Mewburn Ellis LLP
(86) International application number: PCT/JP2022/036401
(87) International publication number: WO 2023/058546

(57) **Abstract**

An object is to provide a prepreg and a fiber-reinforced resin molded article that are excellent in joint strength with other members, appropriately control the resin flow at the time of welding, and excellent in dimensional stability at the time of welding. There is provided a prepreg including a thermoplastic resin layer containing reinforcing fibers and a thermoplastic resin, in which the thermoplastic resin layer is present on at least one surface of the prepreg, and the thermoplastic resin layer contains 65.0 to 99.5% by mass of a constituting unit of the thermoplastic resin and contains 0.5 to 35.0% by mass of a total amount of a constituting unit of a thermosetting resin and a constituting unit of a curing agent with respect to 100% by mass of a total amount of the constituting unit of the thermoplastic resin, the constituting unit of the thermosetting resin, and the constituting unit of the curing agent.

## Description

### TECHNICAL FIELD

The present invention relates to a prepreg having a thermoplastic resin layer, a fiber-reinforced resin molded article obtained by molding the prepreg, and an integrated product obtained by joining the fiber-reinforced resin molded article to another member.

### BACKGROUND ART

Fiber-reinforced composite materials that uses a thermosetting resin or a thermoplastic resin as a matrix resin and is combined with reinforcing fibers such as carbon fibers and glass fibers are lightweight, have excellent mechanical properties such as strength and stiffness, and therefore are applied to many fields such as aerospace, automobiles, railway vehicles, ships, civil engineering and construction, and sporting goods. These fiber-reinforced composite materials, however, are unsuitable for producing parts or structures having a complicated shape in a single molding process, and in such applications, it is necessary to prepare a member including a fiber-reinforced composite material and then to provide a step of integrating the member with another member. At this time, resins having different properties may be combined as necessary.

Joining methods using mechanical joints such as bolts, rivets, or screws, and joining methods using an adhesive are used as a method for integrating the fiber-reinforced composite material with another member. The mechanical joining method has problems in that the production step is prolonged and a production cost is increased because the method requires a step of processing a joint part such as creating holes in advance, and the strength of the material is deteriorated because of the holes. The joining method using the adhesive has disadvantages in which the production process is prolonged because the method requires a bonding process including preparation of an adhesive and coating of the adhesive, and a curing process, and the sufficient reliability in joint strength cannot be obtained.

To the fiber-reinforced composite material using the thermoplastic resin as the matrix resin can be applied a method for joining members by a thermal welding method, in addition to the method described above, and thus the time required for joining the members may possibly be shortened.

Here, Patent Document 1 shows a prepreg sheet material in which a plurality of resin regions made of different thermoplastic resins are formed in a reinforcing fiber sheet layer aligned in a predetermined direction. Patent Document 2 discloses a fiber-reinforced resin sheet in which a nonwoven fabric composed of reinforcing fibers is impregnated with a plurality of different thermoplastic resins.

### PRIOR ART DOCUMENTS

### PATENT DOCUMENTS

Patent Document 1: Japanese Patent Laid-open Publication No. 2012-246442
Patent Document 2: PCT International Publication No. 2014/103658

### SUMMARY OF THE INVENTION

### PROBLEMS TO BE SOLVED BY THE INVENTION

However, in thermal welding between fiber-reinforced composite materials using such a thermoplastic resin as a matrix resin, a shape required for a product has become complicated in recent years, and it has become necessary to integrate various members according to required characteristics. In the production of such a molded article, the thermoplastic resin flows at the time of welding, the dimensional stability of the member at the time of welding becomes insufficient, and sufficient joint strength cannot be obtained under such conditions that the flow is suppressed. Therefore, an object of the present invention is to provide a prepreg and a fiber-reinforced resin molded article that are excellent in joint strength with other members, appropriately control the resin flow at the time of welding, and excellent in dimensional stability at the time of welding.

### SOLUTIONS TO THE PROBLEMS

According to the present invention, there is provided a prepreg including: a thermoplastic resin layer containing reinforcing fibers and a thermoplastic resin, in which the thermoplastic resin layer is present on at least one surface of the prepreg, and the thermoplastic resin layer contains 65.0 to 99.5% by mass of a constituting unit of the thermoplastic resin and contains 0.5 to 35.0% by mass of a total amount of a constituting unit of a thermosetting resin and a constituting unit of a curing agent with respect to 100% by mass of a total amount of the constituting unit of the thermoplastic resin, the constituting unit of the thermosetting resin, and the constituting unit of the curing agent.

### EFFECTS OF THE INVENTION

By using a fiber-reinforced resin molded article obtained by molding a preform containing the prepreg of the present invention, it is possible to produce an integrated product having excellent joint strength and excellent dimensional stability at the time of welding.

### BRIEF DESCRIPTION OF THE DRAWINGS

Fig. 1 is a schematic view of a hybrid prepreg to be described later, and helps to describe a method for measuring a roughness average length RSm and a roughness average height Rc of the hybrid prepreg.
Fig. 2 is a schematic view showing a cross-section perpendicular to a plane of a composite to be described later, and helps to describe a method for measuring a roughness average length RSm and a roughness average height Rc of the hybrid prepreg.

### EMBODIMENTS OF THE INVENTION

Hereinafter, a prepreg according to the present invention will be described. In the following description, "to" represents a range including numerical values at both ends. In addition, a resin composition occupying a region other than reinforcing fibers in a prepreg, that is, a composition containing a constituting unit of a thermoplastic resin, a constituting unit of a thermosetting resin, and a constituting unit of a curing agent, or a resin composition occupying a region other than reinforcing fibers in a fiber-reinforced resin molded article may be collectively referred to as a matrix resin. The term "thermoplastic resin layer" refers to a thermoplastic resin layer (that is, in the case of a hybrid prepreg to be described later, a first thermoplastic resin layer) containing reinforcing fibers, a thermoplastic resin, and a reaction product [A] and a reaction product [B] to be described later.

A prepreg according to the present invention contains reinforcing fibers and a thermoplastic resin, and the thermoplastic resin layer containing 65.0 to 99.5% by mass of a constituting unit of the thermoplastic resin and containing 0.5 to 35.0% by mass of a total amount of a constituting unit of a thermosetting resin and a constituting unit of a curing agent with respect to 100% by mass of a total amount of the constituting unit of the thermoplastic resin, the constituting unit of the thermosetting resin, and the constituting unit of the curing agent is present on at least one surface of the prepreg. At this time, either the constituting unit of the thermosetting resin or the constituting unit of the curing agent may be 0% by mass.

Here, the "constituting unit of the thermoplastic resin", the "constituting unit of the thermosetting resin", and the "constituting unit of the curing agent" refer to parts corresponding to the chemical structures of the thermoplastic resin, the thermosetting resin, and the curing agent, respectively, in the thermoplastic resin layer. That is, when the content is represented by "% by mass of the constituting unit", even when the components are partially reacted from a state of being simply mixed to produce a reaction product, % by mass of the constituting unit does not change as long as the entire mass is preserved. % by mass of the constituting unit of the thermoplastic resin, the constituting unit of the thermosetting resin, and the constituting unit of the curing agent can be measured by a known analysis method such as solution or solid NMR, mass spectrometry, or a combination thereof.

By adopting such a configuration, as compared with the case where the matrix resin is a pure thermoplastic resin, the increase of viscosity of the matrix resin appropriately occurs, and an integrated product having excellent joint strength, having the appropriately controlled resin flow at the time of welding, and excellent dimensional stability at the time of welding is obtained.

When the content of the constituting unit of the thermoplastic resin is less than 65.0% by mass, or the content of the constituting unit of the thermosetting resin and the constituting unit of the curing agent is more than 35.0% by mass, the joint strength of the obtained integrated product may be insufficient. In addition, when the amount of the constituting unit of the thermosetting resin and the constituting unit of the curing agent is less than 0.5% by mass or the amount of the constituting unit of the thermoplastic resin is more than 99.5% by mass, the resin flow becomes excessive, and the dimensional stability at the time of welding may be insufficient.

The prepreg of the present invention is a prepreg having a thermoplastic resin layer containing reinforcing fibers and a thermoplastic resin as described above, but has the following first to third preferred embodiments.

In a first preferred embodiment, the thermoplastic resin layer contains the constituting unit of the thermosetting resin and/or the constituting unit of the curing agent in the form of a reaction product [A] of a bifunctional or higher functional thermosetting resin monomer or prepolymer and a bifunctional or higher functional curing agent. Hereinafter, the "reaction product [A] of bifunctional or higher functional thermosetting resin monomer or prepolymer and bifunctional or higher functional curing agent" may be simply referred to as "reaction product [A]".

Here, "the thermoplastic resin layer contains the constituting unit of the thermosetting resin and/or the constituting unit of the curing agent in the form of a reaction product [A]" means that the thermoplastic resin layer contains the thermoplastic resin and the reaction product [A] containing the bifunctional or higher functional thermosetting resin monomer or prepolymer and a bifunctional or higher functional curing agent as raw materials. Here, the "monomer" refers to a minimum unit constituting a prepolymer or a polymer, and is a constituting unit of a thermoplastic resin, a thermosetting resin, and a curing agent. The "prepolymer" refers to an intermediate product obtained by stopping a polymerization or condensation reaction of a monomer at an appropriate place.

By adopting such a configuration, not only an integrated product excellent in dimensional stability at the time of welding described above can be obtained, but also the thermoplastic resin is modified by the reaction product [A] containing the thermosetting resin monomer or prepolymer and the curing agent as raw materials, and accordingly, additional effects such as improvement of heat resistance and solvent resistance and reduction of water absorption can be obtained depending on the type of the thermosetting resin monomer or prepolymer and the curing agent. At this time, the thermoplastic resin may be simply mixed with the reaction product [A], and a part of the thermoplastic resin may react with a part of the reaction product [A].

In the second preferred embodiment, the thermoplastic resin layer contains the constituting unit of the thermosetting resin and/or the constituting unit of the curing agent in the form of a reaction product [B] obtained by reacting the thermoplastic resin with a bifunctional or higher functional thermosetting resin monomer or prepolymer and/or a bifunctional or higher functional curing agent. Hereinafter, the "reaction product [B] in which the thermoplastic resin has reacted with a bifunctional or higher functional thermosetting resin monomer or prepolymer and/or bifunctional or higher functional curing agent" may be simply referred to as "reaction product [B]".

Here, "the thermoplastic resin layer contains the constituting unit of the thermosetting resin and/or the constituting unit of the curing agent in the form of a reaction product [B]" means that the thermoplastic resin layer contains reaction product [B] containing the thermoplastic resin, the bifunctional or higher functional thermosetting resin monomer or prepolymer and/or a bifunctional or higher functional curing agent as raw materials.

By adopting such a configuration, not only an integrated product excellent in dimensional stability at the time of welding described above can be obtained, but also the thermoplastic resin is modified by the thermosetting resin monomer or prepolymer and/or the curing agent, and accordingly, additional effects such as improvement of heat resistance and solvent resistance and reduction of water absorption can be obtained depending on the type of the thermosetting resin monomer or prepolymer and/or the curing agent.

In a third preferred embodiment, the thermoplastic resin layer contains the constituting unit of the thermosetting resin and/or the constituting unit of the curing agent in the form of a bifunctional or higher functional thermosetting resin monomer or prepolymer and/or a bifunctional or higher functional curing agent.

Here, "the thermoplastic resin layer contains the constituting unit of the thermosetting resin and/or the constituting unit of the curing agent in the form of a bifunctional or higher functional thermosetting resin monomer or prepolymer and/or a bifunctional or higher functional curing agent" means that the thermoplastic resin layer contains a mixture of a thermoplastic resin and a bifunctional or higher functional thermosetting resin monomer or prepolymer and/or a bifunctional or higher functional curing agent. At this time, the bifunctional or higher functional thermosetting resin monomer or prepolymer and/or the bifunctional or higher functional curing agent may be dispersed in the thermoplastic resin or may be miscible with the thermoplastic resin, but preferably, may be miscible with the thermoplastic resin from the viewpoint of uniformity of increase of viscosity of the matrix resin to be described later.

By adopting such a configuration, when molding a fiber-reinforced resin molded article and/or welding it with another member to be described below, the bifunctional or higher functional thermosetting resin monomer or prepolymer and/or the bifunctional or higher functional curing agent reacts with any one of the thermoplastic resin, the bifunctional or higher functional thermosetting resin monomer or prepolymer, and the bifunctional or higher functional curing agent, or a plurality of these, and accordingly, the increase of viscosity of matrix resin appropriately occurs, and an integrated product having excellent joint strength, the appropriately controlled resin flow at the time of welding, and excellent dimensional stability at the time of welding is obtained.

Hereinafter, each component will be described in detail.

### <Reinforcing fiber>

Examples of the reinforcing fibers used in the present invention include glass fibers, carbon fibers, metal fibers, aromatic polyamide fibers, polyaramid fibers, alumina fibers, silicon carbide fibers, boron fibers, and basalt fibers. These reinforcing fibers may be used alone, or two or more thereof may be used in combination as appropriate. As the reinforcing fibers, carbon fibers are preferably used because of their low specific gravity, high strength, and high elastic modulus. Examples of commercially available products of the carbon fiber include "TORAYCA (registered trademark)" T800G-24K, "TORAYCA (registered trademark)" T800S-24K, "TORAYCA (registered trademark)" T700G-24K, "TORAYCA (registered trademark)" T700S-24K, "TORAYCA (registered trademark)" T300-3K, and "TORAYCA (registered trademark)" T1100G-24K (these are manufactured by Toray Industries, Inc.).

Reinforcing fibers subjected to a surface treatment may be used. Examples of the surface treatment include a metal deposition treatment, a treatment with a coupling agent, a treatment with a sizing agent, and an additive adhesion treatment. In the present specification, reinforcing fibers to which a surface treatment agent adheres are referred to as reinforcing fibers including the surface treatment agent.

The form and arrangement of the reinforcing fibers can be appropriately selected from forms in which reinforcing fibers are arranged in one direction, laminates of a form in which reinforcing fibers are arranged in one direction, forms of a woven fabric, and the like. In order to obtain a laminate which is lightweight and has higher level durability, it is preferable that, in each prepreg, the reinforcing fibers are in the form of continuous fibers such as long fibers (fiber bundles) arranged in one direction or woven fabrics.

The reinforced fiber bundle may be formed of a plurality of fibers in the same form, or may be formed of a plurality of fibers in the different forms. The number of the reinforcing fibers forming one reinforced fiber bundle is usually 300 to 60,000 and is preferably 300 to 48,000, and more preferably 1,000 to 24,000, in consideration of production of a substrate. The range of the mass content rate may be a combination of any of the above upper limits and any of the lower limits.

It is preferable that that reinforcing fibers [A] have a strand tensile strength, measured in accordance with the resin-impregnated strand test method in JIS R7608 (2007), of 5.5 GPa or more, because a laminate having excellent joint strength in addition to the tensile strength can be obtained. The strand tensile strength is more preferably 5.8 GPa. The joint strength as used herein refers to a tensile shear joint strength determined in accordance with ISO 4587:1995 (JIS K6850 (1994)).

The prepreg of the present invention preferably has an amount of the reinforcing fibers per unit area of 30 g/m². When the amount of the reinforcing fibers is 30 g/m² or more, handling is facilitated in an operation for obtaining a fiber-reinforced resin molded article or an integrated product. The upper limit of the amount of the reinforcing fibers is not particularly limited, but when the amount thereof is 2000 g/m² or less, the matrix resin can be easily impregnated into the reinforcing fibers, and the lightweight property of the prepreg can be maintained.

### <Thermoplastic resin>

As the type of the thermoplastic resin used in the present invention is not particularly limited, but for example, a thermoplastic resin having a bond selected from the group consisting of a carbon-carbon bond, an amide bond, an imide bond, an ester bond, an ether bond, a carbonate bond, a urethane bond, a thioether bond, a sulfone bond, and a carbonyl bond in the main chain can be preferably used. The thermoplastic resin may be crystalline or amorphous. The thermoplastic resins may be copolymers or modified products of the resin described above and/or blended resins of two or more types thereof.

Among them, at least one type of thermoplastic resin selected from the group consisting of polyamide, polysulfone, polyethersulfone, polyetherimide, polyarylene sulfide, polyetherketoneketone, and polyarylene etherketone is preferable from the viewpoint of the balance between molding processability, heat resistance, and mechanical properties.

In the present specification, the "melting point or glass transition temperature" of a thermoplastic resin means the melting point in the case of a thermoplastic resin having a melting point (typically, a crystalline thermoplastic resin), and means the glass transition temperature in the case of a thermoplastic resin having no melting point (typically, an amorphous thermoplastic resin). In addition, not only melting by heating a thermoplastic resin having a melting point to a temperature equal to or higher than the melting point but also softening by heating a thermoplastic resin not having a melting point to a temperature equal to or higher than the glass transfer point may be referred to as "melting". Here, it was possible to measure the melting point and the glass transition temperature of the thermoplastic resin using a differential scanning calorimeter (DSC) based on JIS K7121 (2012). In a sealed sample container having a volume of 50 µL, 1 to 10 mg of a sample was filled, the temperature is raised at a temperature raising rate of 10°C/min, a step on a DSC curve detected in a range of 30 to 400°C is used as an index of a glass transition temperature, an endothermic peak is used as an index of a melting point, and temperatures are defined as a glass transition temperature and a melting point, respectively. When a plurality of melting points or glass transition temperatures were observed in a mixture, or the like, the highest melting point is adopted as the melting point of the thermoplastic resin.

### <Bifunctional or higher functional thermosetting resin monomer or prepolymer>

The bifunctional or higher functional thermosetting resin monomer or prepolymer used in the present invention is a low molecular weight product of a thermosetting resin (uncured) having two or more functional groups reactive with a functional group and/or a chemical bond of a thermoplastic resin and/or a curing agent. The phrase "reacts with a functional group and/or a chemical bond" as used herein may be any group that reacts with another functional group or chemical bond to form a new covalent bond. Examples of such a combination of functional groups include an epoxy group and an amino group, an epoxy group and a carboxyl group, a carboxyl group and an amino group, an amide bond and an amino group, and the like. The bifunctional or higher functional thermosetting resin monomer or prepolymer may be a compound that reacts with the same type of monomer or prepolymer.

Furthermore, the term "low molecular weight product" as used herein refers to a product having a molecular weight calculated from the structural formula or a weight average molecular weight measured by gel permeation chromatography of less than 10000 g/mol. A preferable range of the molecular weight or the weight average molecular weight is 8000 g/mol or less, more preferably 5000 g/mol or less, still more preferably 3000 g/mol or less, and particularly preferably 2000 g/mol or less. The weight average molecular weight referred to herein refers to a weight average molecular weight measured by gel permeation chromatography and converted in terms of polystyrene. When the molecular weight or the weight average molecular weight is 10000 g/mol or more, the reaction of the functional group may hardly occur.

The bifunctional or higher functional thermosetting resin monomer or prepolymer used in the present invention is not particularly limited as long as the bifunctional or higher functional thermosetting resin monomer or prepolymer is a resin in which a reaction proceeds by heat to at least partially form a three-dimensional crosslinked structure. Examples of the thermosetting resin include an epoxy resin, a benzoxazine resin, a bismaleimide resin, an unsaturated polyester resin, a vinyl ester resin, a phenol resin, a urea resin, a melamine resin, and a thermosetting polyimide resin, and modified products thereof and resins obtained by blending two or more types thereof can also be used. Further, these thermosetting resins may be resins which are self-cured by heating, or may contain a curing agent, a curing accelerator, or the like.

The epoxy resin used in the present invention is not particularly limited, and examples thereof include bisphenol epoxy resins such as bisphenol A epoxy resins, bisphenol F epoxy resins, bisphenol AD epoxy resins and bisphenol S epoxy resins; brominated epoxy resins such as tetrabromobisphenol A diglycidyl ethers; epoxy resins having a biphenyl skeleton; epoxy resins having a naphthalene skeleton; epoxy resins having a dicyclopentadiene skeleton; novolac epoxy resins such as phenol novolac epoxy resins and cresol novolac epoxy resins; glycidyl amine epoxy resins such as N,N,O-triglycidyl-m-aminophenol, N,N,O-triglycidyl-p-aminophenol, N,N,O-triglycidyl-4-amino-3-methylphenol, N,N,N',N'-tetraglycidyl-4,4'-methylenedianiline, N,N,N',N'-tetraglycidyl-2,2'-diethyl-4,4'-methylenedianiline, N,N,N',N'-tetraglycidyl-m-xylylenediamine, N,N-diglycidyl aniline and N,N-diglycidyl-o-toluidine; resorcinol diglycidyl ether; triglycidyl isocyanurate; and the like.

### <Bifunctional or higher functional curing agent>

The bifunctional or higher functional curing agent used in the present invention is not particularly limited as long as the bifunctional or higher functional curing agent is a curing agent in which a reaction proceeds by heat to form a covalent bond. Examples of the curing agent include amine compounds, acid anhydrides, polyaminoamides, organic acid hydrazides, and isocyanates used as curing agents for epoxy resins. In addition, examples thereof include an epoxy resin used as a curing agent for a benzoxazine resin, a phenol compound used as a curing agent for a bismaleimide resin, and the like.

In addition, it is preferable to contain at least two compounds as the bifunctional or higher functional thermosetting resin monomer or prepolymer and/or the bifunctional or higher functional curing agent. At this time, in addition to the reaction between the bifunctional or higher functional thermosetting resin monomer or prepolymer and/or the bifunctional or higher functional curing agent and the thermoplastic resin, a combination in which the compounds form a covalent bond by reaction is preferable because the increase of viscosity of the matrix resin efficiently occurs at the time of welding. Examples of such a combination of a bifunctional or higher functional thermosetting resin monomer or prepolymer and/or a bifunctional or higher functional curing agent include an epoxy resin and a curing agent for an epoxy resin.

Among the curing agents of the epoxy resin, an amine compound is preferable from the viewpoint of ease of reaction control. In addition, from the viewpoint of heat resistance and mechanical properties, an aromatic amine compound is preferable, and it is preferable to have 1 to 4 phenyl groups in the molecule. From the viewpoint of heat resistance, an aromatic polyamine compound in which two or more phenyl groups are phenyl groups having an amino group at the para position is preferably used, and an aromatic amine compound having a sulfur atom in the molecule is more preferably used. Specific examples of such an aromatic amine include meta-phenylenediamine, diaminodiphenylmethane, diaminodiphenyl sulfone, tris(3-aminophenyl)phosphine oxide, meta-xylylenediamine, (p-phenylene methylene)dianiline, various derivatives such as alkyl-substituted derivatives of these compounds, and isomers having different positions of amino groups. Among them, in the case of aircraft, spacecraft applications and the like, it is preferable to use 4,4'-diaminodiphenyl sulfone and 3,3'-diaminodiphenyl sulfone that can obtain a reaction product which is excellent in heat resistance and elastic modulus, in which a decrease in heat resistance due to coefficient of thermal expansion and moisture absorption is small. These aromatic amine compounds may be used alone or in combination of two or more thereof.

The proportions of each component with respect to 100% by mass of the total amount of the bifunctional or higher functional thermosetting resin monomer or prepolymer and the bifunctional or higher functional curing agent need to be appropriately adjusted depending on the type of the compound to be used, but when the proportion of the thermosetting resin monomer or prepolymer is in the range of 60.0 to 99.5% by mass and the proportion of the curing agent is in the range of 0.5 to 40.0% by mass, the increase of viscosity of the matrix resin appropriately occurs at the time of welding, which is preferable.

From the viewpoint of uniformity of the matrix resin, at least a part, more preferably all of the thermosetting resin monomer or prepolymer and the curing agent are preferably miscible with the thermoplastic resin.

The thermoplastic resin layer may contain a reaction product generated when a part of the thermoplastic resin reacts with a part of a bifunctional or higher functional thermosetting resin monomer or prepolymer and a part of a bifunctional or higher functional curing agent when the matrix resin is impregnated into the reinforcing fiber.

### <Reaction product [A] of bifunctional or higher functional thermosetting resin monomer or prepolymer and bifunctional or higher functional curing agent>

The reaction product [A] used in the present invention is a reaction product of the bifunctional or higher functional thermosetting resin monomer or prepolymer and the bifunctional or higher functional curing agent, and is a compound in which a functional group of the thermosetting resin monomer or prepolymer and a functional group of the curing agent react with each other. The "a functional group reacted" as used herein means that a new covalent bond is formed. Examples of such a combination of functional groups include an epoxy group and an amino group, a phenolic hydroxyl group and an epoxy group generated by ring-opening of a benzoxazine ring, a maleimide group and an amino group, and the like.

The reaction product [A] may be used alone, or two or more types of reaction products may be used in combination. When the thermosetting resin has one functional group per molecule, the glass transition temperature of the reaction product with the curing agent is lowered, which may adversely affect the heat resistance of the matrix resin. The bifunctional or higher functional thermosetting resin monomer or prepolymer and the bifunctional or higher functional curing agent to be used as the raw material of the reaction product [A] are not particularly limited, and examples thereof include the compounds exemplified in the above description regarding the bifunctional or higher functional thermosetting resin monomer or prepolymer and the bifunctional or higher functional curing agent.

For confirming the presence of the reaction product [A] in the prepreg, gel permeation chromatography (GPC) using hexafluoroisopropanol as an eluent is used. A sample obtained by extracting a resin composition from a predetermined amount of prepreg using hexafluoroisopropanol is used as a measurement sample, a chromatogram of the extract is compared with a mixture of each raw material before mixing, and the occurrence of an increase in the peak area is determined for a peak derived from a reaction product. When the thermoplastic resin is not dissolved in hexafluoroisopropanol, the measurement may be appropriately performed using another eluent. When there is no solvent in which the thermoplastic resin is dissolved, a predetermined amount of matrix resin collected from the prepreg may be used as a measurement sample, and a known analysis method such as solid NMR may be combined.

From the viewpoint of uniformity of the matrix resin and efficient increase of viscosity of the matrix resin, the reaction product [A] is preferably miscible with the thermoplastic resin. A reaction may occur between the reaction product [A] and the thermoplastic resin, that is, the thermoplastic resin layer may further contain a reaction product of the thermoplastic resin and the reaction product [A]. From the viewpoint of uniformity of the matrix resin, the reaction product of the thermoplastic resin and the reaction product [A] is preferably miscible with the thermoplastic resin.

The miscibility between the thermoplastic resin and each reaction product is determined in the following manner: the prepared prepreg is sliced, then stained, and a transmitted electron image is acquired at an appropriate magnification at an acceleration voltage of 100 kV using a transmission electron microscope (manufactured by Hitachi, Ltd., H-7100) to confirm the presence or absence of a phase-separated structure. Here, a sample in which a phase-separated structure is not confirmed is determined as "miscible", and a sample in which a phase-separated structure is confirmed is determined as "phase separation". As the dyeing agent, OsO₄ and RuO₄ can be selectively used according to the resin composition to impart a sufficient contrast to the morphology. The appropriate magnification is 50,000 times when the structural period is 1 nm or more and less than 10 nm, 20,000 times when the structural period is 10 nm or more and less than 100 nm, 2,000 times when the structural period is 100 nm or more and less than 1,000 nm, and 1,000 times when the structural period is 1,000 nm or more.

In the thermoplastic resin layer, the reaction product [A] preferably forms a semi-IPN structure or an IPN structure with the thermoplastic resin. Here, IPN is an abbreviation for interpenetrating polymer network, which is a type of polymer blend. The IPN is a structure in which blend component polymers are cross-linked polymers, and different cross-linked polymers are partially or wholly entangled with one another to form a multi-network structure. The semi IPN is a structure in which a cross-linked polymer and a linear polymer form a multiple network structure. By using a matrix resin in which the thermoplastic resin is converted into semi-IPN in the reaction product [A], excellent heat resistance and impact resistance can be imparted to the fiber-reinforced resin molded article.

In the thermoplastic resin layer, from the viewpoint of appropriately increasing the viscosity of the thermoplastic resin and efficiently imparting the additional effect, the reaction product [A] preferably contains 60.0 to 99.5% by mass of the constituting unit of the thermosetting resin and 0.5 to 40.0% by mass of the constituting unit of the curing agent with respect to 100% by mass of the total amount of the constituting unit of the thermosetting resin and the constituting unit of the curing agent. Here, the "constituting unit of thermosetting resin " and the "constituting unit of curing agent " refer to parts corresponding to the chemical structures of the thermosetting resin monomer or prepolymer, which is a raw material of the reaction product [A], and the curing agent, respectively, in the reaction product [A].

### <Reaction product [B] obtained when bifunctional or higher functional thermosetting resin monomer or prepolymer and/or bifunctional or higher functional curing agent and thermoplastic resin react with each other>

The reaction product [B] used in the present invention is a reaction product of a bifunctional or higher functional thermosetting resin monomer or prepolymer and/or a bifunctional or higher functional curing agent and a thermoplastic resin, and is a compound in which a functional group of the thermosetting resin and/or a functional group of the curing agent and a functional group of the thermoplastic resin react with each other.

The phrase "a functional group reacted" as used herein refers to a reaction with another functional group or a chemical bond to form a new covalent bond. Examples of such a combination of functional groups include an epoxy group and an amino group, an epoxy group and a carboxyl group, a carboxyl group and an amino group, an amide bond and an amino group, and the like.

The reaction product [B] may be used alone, or two or more types of reaction products may be used in combination. When the thermosetting resin has one functional group in one molecule, the increase of viscosity of the reaction product [B] may insufficient as compared with the thermoplastic resin that is a raw material of the reaction product [B]. The bifunctional or higher functional thermosetting resin monomer or prepolymer used in the present invention is not particularly limited, and examples thereof include the resins exemplified above, such as a bifunctional or higher functional epoxy resin, a benzoxazine resin, and a bismaleimide resin.

When the curing agent has one functional group in one molecule, the increase of viscosity of the reaction product [B] may be insufficient as compared with the thermoplastic resin which is a raw material of the reaction product [B]. The bifunctional or higher functional curing agent used in the present invention is not particularly limited, and examples thereof include a bifunctional or higher amine compound, an epoxy resin used as a curing agent for a benzoxazine resin, and a phenol compound used as a curing agent for a bismaleimide resin.

The confirmation of the presence of the reaction product [B] in the prepreg can be performed in the same manner as the confirmation of the presence of the reaction product [A] in the prepreg described above. As an eluent, gel permeation chromatography (GPC) using hexafluoroisopropanol is used. A sample obtained by extracting a resin composition from a predetermined amount of prepreg using hexafluoroisopropanol is used as a measurement sample, a chromatogram of the extract is compared with a mixture of each raw material before mixing, and the occurrence of an increase in the peak area is determined for a peak derived from a reaction product. When the reaction product [B] is not dissolved in hexafluoroisopropanol, the measurement may be appropriately performed using another eluent. When there is no solvent in which the reaction product [B] is dissolved, a predetermined amount of matrix resin collected from the prepreg may be used as a measurement sample, and a known analysis method such as solid NMR may be combined.

In an aspect of the prepreg of the present invention, the reaction product [B] is soluble in a solvent. Here, "the reaction product [B] is soluble in a solvent" means that a homogeneous solution is obtained by mixing the reaction product [B] with a solvent. The term "uniform solution" means that a visually unseparated state is obtained, and specifically, when 0.5% by mass of the reaction product [B] is added to at least one or more solvents and stirred and mixed at 30°C, a case where a visually unseparated solution is obtained is referred to as "soluble", and the other cases are referred to as "insoluble".

In another aspect of the prepreg of the present invention, the reaction product [B] has a crosslinked structure. Here, "having a crosslinked structure" means that the molecular chain of the reaction product [B] has a three-dimensional network structure. The presence of the crosslinked structure can be confirmed by various analyses. Specific examples thereof include FT-IR, solid-state NMR, and X-ray photoelectron spectroscopy.

The thermoplastic resin layer in the prepreg of the present invention may contain the reaction product [A] together with the reaction product [B]. Accordingly, it is possible to efficiently increase the viscosity of the reaction product [B].

The reaction product [A] may be used alone, or two or more types of reaction products may be used in combination.

From the viewpoint of uniformity of the matrix resin and efficient increase of viscosity of the matrix resin, the reaction product [A] is preferably miscible with the reaction product [B]. Determination of miscibility between the reaction product [A] and the reaction product [B] can be performed in the same manner as the determination of miscibility between the reaction product [A] and the thermoplastic resin described above.

In the thermoplastic resin layer, from the viewpoint of appropriately increasing the viscosity of the thermoplastic resin and efficiently imparting the additional effect, the reaction product [A] preferably contains 60.0 to 99.5% by mass of the constituting unit of the thermosetting resin and 0.5 to 40.0% by mass of the constituting unit of the curing agent with respect to 100% by mass of the total amount of the constituting unit of the thermosetting resin and the constituting unit of the curing agent. Here, the "constituting unit of thermosetting resin " and the" constituting unit of curing agent " refer to parts corresponding to the chemical structures of the thermosetting resin and the curing agent, which are raw materials of the reaction product [B], respectively, in the reaction product [B].

In the prepreg of the present invention, it is preferable that the areal weight of the thermoplastic resin layer is 10 g/m² or more. When the areal weight of the thermoplastic resin layer is 10 g/m² or more, a sufficient thickness for exhibiting excellent joint strength can be obtained, and a sufficient thickness for integration with other members can be obtained, which is preferable. The areal weight is more preferably 20 g/m² or more, and further preferably 50 g/m² or more. An upper limit value is not particularly limited, but is preferably 1000 g/m² or less in order to obtain a fiber-reinforced resin substrate in which an amount of the thermoplastic resin is not excessively large as compared with the amount of the reinforcing fibers and which is excellent in specific strength and specific elastic modulus. Here, the areal weight refers to a mass (g) of the thermoplastic resin included per 1 m² of the fiber-reinforced resin substrate.

### <Hybrid prepreg>

The prepreg of the present invention may have, in addition to the thermoplastic resin layer (hereinafter, referred to as a "first thermoplastic resin layer" in the description of the present aspect) described above, a thermoplastic resin layer (hereinafter, referred to as a "second thermoplastic resin layer" in the description of the present aspect) containing at least one thermoplastic resin which is joined to the thermoplastic resin layer by forming an interface with the thermoplastic resin layer, and has a constituting unit of a thermoplastic resin different from the thermoplastic resin contained in the first thermoplastic resin layer. Additionally, the prepreg of the present invention may have, in addition to the first thermoplastic resin layer, a thermosetting resin layer containing at least one thermosetting resin which is joined to the thermoplastic resin layer by forming an interface with the thermoplastic resin layer.. Hereinafter, such aspects are collectively referred to as "hybrid prepreg".

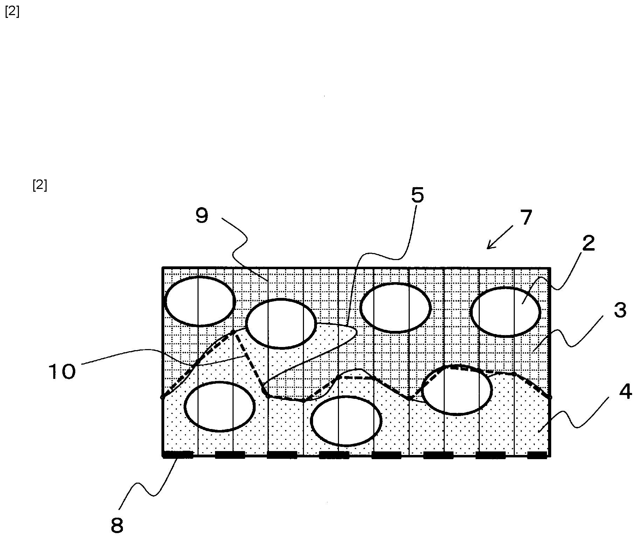

In particular, in the prepreg of the present invention, the second thermoplastic resin layer or the thermosetting resin layer and the first thermoplastic resin layer are preferably adjacent to each other in a layered form. Adjacent in a layered form means, for example, as shown in Fig. 2, a state where the thermoplastic resin layer 3 and the thermosetting resin layer 4, which are continuous in the plane direction, are in close contact with each other while forming the interface 5 in a cross section obtained by cutting perpendicular to the plane direction of the prepreg. When the thermoplastic resin is present in a particulate form, a fibrous form, a nonwoven fabric form, or the like instead of a continuous state in a layered form, the proportion of the area where the epoxy resin is exposed on the surface increases, and the coverage of the thermoplastic resin on the outermost surface decreases, and thus the weldability tends to decrease.

In the present invention, the thermoplastic resin contained in the second thermoplastic resin layer has a constituting unit of a thermoplastic resin different from the thermoplastic resin (or a constituting unit of the thermoplastic resin) contained in the first thermoplastic resin layer. The difference in resin type is determined by the identity of the structure characterizing the thermoplastic resin. For example, a polyamide resin is a resin having a repeating unit including an amide bond, and a polycarbonate resin is a resin having a repeating unit including a carbonate bond, and these are resins having repeating units of different bonds, and thus are determined to be different resin types.

In these hybrid prepregs, it is preferable that a first thermoplastic resin layer is present on at least one surface, the first thermoplastic resin layer contains continuous reinforcing fibers, and the reinforcing fibers are distributed in a region of 80% or more of the thickness of each layer of the first thermoplastic resin layer and the second thermoplastic resin layer or the thermosetting resin layer in a cross section perpendicular to the plane direction.

In the hybrid prepreg of the present invention, the adhesion force in the fiber axis direction and the direction orthogonal to the fiber axis direction can be simultaneously evaluated by observing the aspect of the resin layer at the interface in a cross section obtained by cutting the hybrid prepreg perpendicular to the planar direction of the fiber-reinforced resin substrate. Specifically, in a plan view of the hybrid prepreg, a cross section perpendicular to the plane of the fiber-reinforced resin substrate containing the continuous reinforcing fiber may be observed from a direction at an angle different by 45 degrees with respect to the fiber direction of any continuous reinforcing fiber contained in the first thermoplastic resin layer regardless of whether the direction is clockwise or counterclockwise.

In the hybrid prepreg of the present invention, it is preferable that the cross section curve, formed by the interface at which the 2 resin layers closely adhere to each other, has a roughness average length RSm of 100 um or less, and a roughness average height Rc of 3.5 um or more, defined in JIS B0601 (2001). When the RSm is 100 um or less, not only a chemical or/and physical bonding force but also a mechanical joining force called interpenetration is applied, and thus the resin layers are hardly peeled off from each other. The lower limit value of RSm is not particularly limited but is preferably 15 um or more from the viewpoint of avoiding decrease in the mechanical joining force due to stress concentration. In addition, when the Rc of the cross section curve is 3.5 um or more, not only the development of the mechanical joining force due to interpenetration but also the chemical and/or physical bonding of the continuous reinforcing fiber, which is present on the interface, with both the resin layers improve the adhesion force with both the resin layers. A preferable range of Rc is 10 um or more, in which the continuous reinforcing fibers are easily included in both the resin layers and thus the adhesion force is further improved, and particularly preferably 20 um or more. The upper limit value of Rc is not particularly limited but is preferably 100 um or less from the viewpoint of avoiding a decrease in mechanical joining force due to stress concentration.

Here, as a method for measuring the roughness average height Rc and the roughness average length RSm of the cross section curve, a known method can be used. Examples thereof may include a method in which measurement is performed from a cross-sectional image acquired using an X-ray CT, a method in which measurement is performed from an elemental analysis mapping image by using an energy dispersive X-ray spectrometer (EDS), and a method in which measurement is preformed from a cross-sectional observation image by using an optical microscope, a scanning electron microscope (SEM), or a transmission electron microscope (TEM). In the observation, both resin layers may be stained in order to adjust the contrast. In the image obtained by any of the methods described above, the roughness average height Rc and the roughness average length RSm of the cross section curve are measured in a range of 500 um × 500 um. The calculation of Rc and RSm from the cross-sectional observation image can be performed by the method described in Examples described below.

As a method of setting the roughness average height Rc and the roughness average length RSm of the cross section curve within preferable ranges, there is a method of increasing the time for pressurization by increasing the number of nip rolls to be pressurized in the step of impregnating the continuous reinforcing fiber with the thermoplastic resin. In addition, the viscosity of the thermoplastic resin can be reduced by increasing the pressure for pressurization, setting the surface temperature of a member to be heated and pressurized such as a nip roll to be high, and the like.

### <Preform>

The prepreg of the present invention can be formed into a preform singly or by being laminated with a metal member, a prepreg using a thermosetting resin as a matrix resin, a prepreg using a thermoplastic resin as a matrix resin, or the like.

### <Fiber-reinforced resin molded article>

The fiber-reinforced resin molded article of the present invention can be produced by molding a preform containing the prepreg of the present invention described above, and typically can be produced by laminating a plurality of prepregs and then heating and pressurizing the laminate. As a method of heating and pressurizing the hybrid prepreg, for example, a compression molding method, an autoclave molding method, a bagging molding method, a wrapping tape method, an internal pressure molding method, or the like is adopted.

More specific examples of the method for molding the fiber-reinforced resin molded article of the present invention include a method of laminating the above-described prepreg or hybrid prepreg of the present invention alone or together with another prepreg and molding it by a compression molding method, an autoclave molding method, a bagging molding method, a wrapping tape method, an internal pressure molding method or the like, and a method of using the hybrid prepreg of the present invention and another fiber-reinforced resin substrate or fiber substrate and molding it by a hand lay-up method, a filament winding method, a pultrusion method, a resin injection molding method, a resin transfer molding method or the like.

### <Integrated product>

The fiber-reinforced resin molded article of the present invention can prepare an integrated product with high producibility by thermally welding another member (adherend) with the thermoplastic resin layer interposed therebetween. The adherend is not particularly limited as long as the adherend is a member that can be thermally welded to the thermoplastic resin layer, and examples thereof include a member containing a thermoplastic resin, a metal member having a surface on which a thermoplastic resin is disposed, and a member subjected to fine processing in which a thermoplastic resin intrude into a surface. The adherend may also be the fiber-reinforced resin molded article of the present invention. That is, it is also possible to join the thermoplastic resin layers of the fiber-reinforced resin molded article of the present invention to each other to form an integrated product. The means for thermally welding the fiber-reinforced resin molded article and the adherend to each other is not particularly limited, and examples thereof include vibration welding, ultrasonic welding, laser welding, resistance welding, induction welding, insert injection molding, and outsert injection molding.

The strength of the joint in the integrated molded body can be evaluated based on ISO 4587: 1995 (JIS K6850 (1994)) and ASTM D7291-07. The tensile shear joint strength, measured based on ISO 4587: 1995, is preferably 20 MPa or more at a test environment temperature of 23°C, more preferably 25 MPa or more, and further more preferably 28 MPa.

### EXAMPLES

Hereinafter, the present invention will be described in detail with reference to Examples. However, the scope of the present invention is not limited to these Examples. In addition, measurement of various characteristics was performed under an environment of a temperature of 23°C and a relative humidity of 50%, unless otherwise noted.

### <Materials used in Examples and Comparative Examples>

The materials used in each of Examples and Comparative Examples are as shown in Tables 1 to 11.

### <Reinforcing fiber>

· T800S: "TORAYCA (registered trademark)" T800SC-24000 (carbon fiber having 24,000 filaments, tensile strength of 5.9 GPa, tensile elastic modulus of 294 GPa, and tensile elongation of 2.0%, manufactured by Toray Industries, Inc.)
· T700S: "Torayca (registered trademark)" cross CK6273C ("Torayca (registered trademark)" T700SC-12000 (carbon fiber having 12,000 fibers, tensile strength of 4.9 GPa, tensile elastic modulus of 230 GPa, and tensile elongation of 2.1%, plain weave, areal weight: 192 g/m², manufactured by Toray Industries, Inc.).
· A continuous E-glass fiber with a total single yarn number of 1,600 subjected to a bundling treatment was used. The characteristics are as follows.

Single filament diameter: 13 um
Tensile strength: 3400 MPa
Tensile elastic modulus: 72 GPa
Tensile elongation: 3%
Density: 2.6 g/cm³.

### <Thermoplastic resin>

· "AMILAN (registered trademark)" CM4000 (ternary copolymerized polyamide resin, melting point: 155°C, manufactured by Toray Industries, Inc.)
· "AMILAN (registered trademark)" CM1007 (Polyamide 6, melting point: 225°C, manufactured by Toray Industries, Inc.)
· A film, prepared by the following method, containing a reaction product of a thermoplastic resin and a bifunctional or higher functional thermosetting resin monomer or prepolymer

"AMILAN (registered trademark)" CM1007 of a thermoplastic resin and "jER (registered trademark)" 828 of a bifunctional or higher functional thermosetting resin monomer or prepolymer were mixed at a mass ratio of 90:10, melted and mixed at 260°C for 30 minutes, and then formed into a film.

· "SUMIKAEXCEL (registered trademark)" PES5003P (polyethersulfone, weight average molecular weight: 47000 g/mol, glass transition temperature: 225°C, manufactured by Sumitomo Chemical Co., Ltd.)
· "TORELINA(registered trademark)" A670T05 (polyphenylene sulfide, melting point: 278°C, glass transition temperature: 90°C, manufactured by Toray Industries, Inc.)
· "KEPSTAN (registered trademark)" 7002 (polyetherketoneketone, melting point: 331°C, glass transition temperature: 162°C, manufactured by Arkema Com.)

### <Thermoplastic resin used for second thermoplastic resin layer>

### · "KEPSTAN (registered trademark)" 7002 (polyetherketoneketone, melting point: 331°C, glass transition temperature: 162°C, manufactured by Arkema Com.)

### <Bifunctional or higher functional thermosetting resin monomer or prepolymer>

· "jER (registered trademark)" 828 (bisphenol A epoxy resin, manufactured by Mitsubishi Chemical Corporation: epoxy equivalent 184 to 194 g/eq, weight average molecular weight approximately 370 g/mol)
· "SUMI-EPOXY (registered trademark)" ELM434 (tetraglycidyl diaminodiphenylmethane, manufactured by Sumitomo Chemical Co., Ltd., epoxy equivalent: 120 g/eq, molecular weight: 423 g/mol)
· F-a (bisphenol F-aniline type benzoxazine resin, manufactured by Shikoku Chemicals Corporation: epoxy equivalent 184 to 194 g/eq, molecular weight: 434.52 g/mol)
· "Compimide (registered trademark)" MDAB (4,4'-bismaleimide-diphenylmethane, manufactured by Evonik Industries AG, molecular weight: 358.35 g/mol)
· "Compimide (registered trademark)" TDAB (2,4-bismaleimide-toluene, manufactured by Evonik Industries AG, molecular weight: 282.25 g/mol).

### <Bifunctional or higher functional curing agent>

· SEIKACURE-S (4,4'-diaminodiphenyl sulfone, manufactured by Wakayama Seika Kogyo Co., Ltd.: active hydrogen equivalent 62 g/eq, molecular weight: 248 g/mol, used as a curing agent for epoxy resin)
· Tris(3-aminophenyl)phosphine oxide (manufactured by Katayama Chemical Co., Ltd.: active hydrogen equivalent 54 g/eq, molecular weight: 323 g/mol, used as curing agent for epoxy resin)
· DICY7 (dicyandiamide, manufactured by Mitsubishi Chemical Corporation, molecular weight: 84 g/mol, used as a curing agent for epoxy resin)
· "Araldite (registered trademark)" MY0610 (triglycidyl-meta-aminophenol epoxy resin, manufactured by Huntsman Corporation: epoxy equivalent: 114 g/eq, molecular weight: 277.31 g/mol, used as curing agent for benzoxazine resin)
· "Compimide (registered trademark)" TM124 (2,2'-bis(4-hydroxy-3 allylphenyl)propane, manufactured by Evonik Industries AG: molecular weight 308.41 g/mol, used as a curing agent for bismaleimide resin).

### <Other materials used in thermosetting resin composition>

- "SUMIKAEXCEL (registered trademark)" PES5003P (polyethersulfone, manufactured by Sumitomo Chemical Co., Ltd.)
- "Virantage (registered trademark)" VW10700RFP (polyethersulfone, manufactured by Solvay SA)
- "Matrimid (registered trademark)" 9725 (polyimide, from Huntsman Advanced Materials)
- EPTS (ethyl p-toluenesulfonate, manufactured by Tokyo Chemical Industry Co., Ltd.).

### <Reaction product [A] of bifunctional or higher functional thermosetting resin monomer or prepolymer and bifunctional or higher functional curing agent>

### · Reaction products prepared by the following method (A-1 to A-7)

A bifunctional or higher functional thermosetting resin monomer or prepolymer and a bifunctional or higher functional curing agent were charged into a mixing apparatus in the proportions shown in Table 1, and heated and mixed at 180°C for 5 minutes to obtain reaction products A-1 to A-4, A-6, and A-7 of a bifunctional or higher functional epoxy resin and an amine compound. In addition, "jER (registered trademark)" 828 and SEIKACURE-S were charged into a mixing apparatus in the proportions shown in Table 1, and heated and mixed at 50°C. The obtained mixture was heated in an oven at 180°C for 30 minutes to obtain a reaction product A-5 of a bifunctional or higher epoxy resin and an amine compound.

### <Reaction product [B] of thermoplastic resin with bifunctional or higher functional thermosetting resin monomer or prepolymer and/or bifunctional or higher functional curing agent>

· Reaction products prepared by the following method (B-1 to B-12)
"AMILAN (registered trademark)" CM1007, a bifunctional or higher functional thermosetting resin monomer or prepolymer and/or a bifunctional or higher functional curing agent were charged into a mixing apparatus in the proportions shown in Table 5, and heated and mixed at 260°C for 30 minutes to obtain reaction products B-1 to B-4 and B-11 of polyamide 6 with the bifunctional or higher functional thermosetting resin monomer or prepolymer and/or the bifunctional or higher functional curing agent. In addition, "AMILAN (registered trademark)" CM1007 and a bifunctional or higher functional thermosetting resin monomer or prepolymer were charged into a mixing apparatus in the proportions shown in Table 5, and heated and mixed at 260°C for 30 minutes, and then, a bifunctional or higher functional curing agent was charged and heated and mixed at 260°C for 30 minutes to obtain reaction products B-5 to B-10 and B-12 of polyamide 6 with the bifunctional or higher functional thermosetting resin monomer or prepolymer and/or the bifunctional or higher functional curing agent.

### <Thermosetting prepreg>

In a kneader, "jER (registered trademark)" 828, "SUMI-EPOXY (registered trademark)" ELM 434, and "SUMIKAEXCEL (registered trademark)" PES5003P having the compositions and proportions shown in Table 3 were added, and heated to 150°C or higher while mixing, and stirred as it was for 1 hour to dissolve "SUMIKAEXCEL (registered trademark)" PES5003P, thereby obtaining a transparent viscous liquid. This liquid was cooled to 100°C or lower while being mixed, then SEIKACURE-S was added thereto, and the mixture was further mixed to obtain a thermosetting resin composition.

A thermosetting resin composition using a benzoxazine resin was prepared by the following method. While "Araldite (registered trademark)" MY0610 and "Virantage (registered trademark)" VW10700RFP were mixed in a kneader, the temperature was raised to 150°C or higher, and the mixture was stirred as it was for 1 hour to dissolve "Virantage (registered trademark)" VW10700RFP, thereby obtaining a transparent viscous liquid. This liquid was cooled to 100°C or lower while being mixed, and then a benzoxazine resin was added and further mixed until completely dissolved to obtain a thermosetting resin composition.

A thermosetting resin composition containing a bismaleimide resin was prepared by the following method. While "Compimide (registered trademark) " TM124 and "Matrimid (registered trademark)" 9725 were mixed in a kneader, the temperature was raised to 120°C or higher, and the mixture was stirred as it was for 1 hour to dissolve "Matrimid (registered trademark) " 9725, thereby obtaining a transparent viscous liquid. The temperature of this liquid was lowered to 100°C or lower while being mixed, and then the mixture of "Compimide (registered trademark)" MDAB and "Compimide (registered trademark)" TDAB heated to 140°C in advance was added and further mixed to obtain a thermosetting resin composition.

The obtained thermosetting resin composition was coated on a release paper in a resin areal weight of 50 g/m² using a knife coater to prepare a resin film. This resin film was superimposed on both surfaces of a reinforcing fiber sheet (areal weight: 190 g/m²) in which reinforcing fibers of reinforcing fibers [A] were aligned in one direction, heat rolling was used, and the thermosetting resin composition was impregnated while being heated and pressurized using a heat roll to obtain a thermosetting prepreg.

### <Evaluation and measurement method>

### (1) Method for measuring melting point and glass transition temperature of thermoplastic resin

The melting point and the glass transition temperature of the thermoplastic resin were measured using a differential scanning calorimeter (DSC) based on JIS K7121 (2012). In a sealed sample container having a volume of 50 µL, 1 to 10 mg of a sample was filled, the temperature was raised at a temperature raising rate of 10°C/min, a step on a DSC curve detected in a range of 30 to 400°C was used as an index of a glass transition temperature, an endothermic peak was used as an index of a melting point, and temperatures were defined as a glass transition temperature and a melting point, respectively. When a plurality of melting points or glass transition temperatures were observed in a mixture or the like, the highest melting point was adopted as the melting point of the thermoplastic resin.

### (2) Method for preparing integrated product for measuring tensile shear joint strength

8 prepregs cut into a predetermined size were prepared, and laminated in a configuration of [0°/90°]_{2S} (symbol S indicates mirror symmetry), defining the axial direction of the reinforcing fiber as 0° and the axis orthogonal direction as 90°. This laminate was set in a compression molding die heated to the melting point or glass transition temperature of the thermoplastic resin +35°C, and a pressure of 1 MPa was applied thereto by a press machine while maintaining this shape, and the laminate was heated for 12 minutes to obtain a fiber-reinforced resin molded article. The prepared fiber-reinforced resin molded article was cut into 2 panels, having sizes of a width of 250 mm and a length of 92.5 mm, in which 0° direction was the length direction of the test piece, and the panels were dried in a vacuum oven for 24 hours. Thereafter, the 2 panels were superimposed such that a range of 12.5 mm in length from the end portions of the 2 panels was a joint surface with the 0° direction as a length direction, a pressure of 1 MPa was applied thereto at a welding temperature (melting point of thermoplastic resin +25°C, glass transition temperature +100°C when the melting point is not shown) shown in Tables 2 to 4 and Tables 6 to 11, and the superimposed surfaces were held for 6 minutes to weld the superimposed surfaces, thereby obtaining an integrated product for evaluation of tensile shear joint strength.

### (3) Method for measuring tensile shear joint strength

A tab was bonded to the integrated product prepared in each of the above (2) in accordance with ISO 4587: 1995 (JIS K6850 (1994)), and it was cut into a piece having a width of 25 mm to obtain a desired test piece. The obtained test piece was dried in a vacuum oven for 24 hours, the tensile shear joint strength was measured at an environmental temperature of 23°C based on ISO 4587: 1995 (JIS K6850 (1994)), and evaluation was performed as described below based on the measurement results.
28 MPa or more: A
25 MPa or more and less than 28 MPa: B
20 MPa or more and less than 25 MPa: C
Less than 20 MPa: D (failed).

### (4) Method for evaluating dimensional stability at the time of welding

Regarding the dimensional stability at the time of welding, when T1 and T2 are the mean thicknesses of the 2 fiber-reinforced resin molded articles before welding, respectively, and T3 is the mean thickness of the integrated product after welding, the rate of change in thickness before and after welding determined by (T1 + T2 - T3)/(T1 + T2) × 100 was calculated, and evaluated as follows based on the calculation result.
5% or less: A
More than 5% and 8% or less: B
More than 8% and 10% or less: C
More than 10%: D (failed)

Here, the thickness was measured at 10 points at equal intervals in the width direction using a micrometer in a region having a length of 12.5 mm and a width of 250 mm corresponding to the joint surface before and after welding, and the mean value thereof was taken as the mean thickness.

### (5) Roughness average length RSm and roughness average height Rc of hybrid prepreg

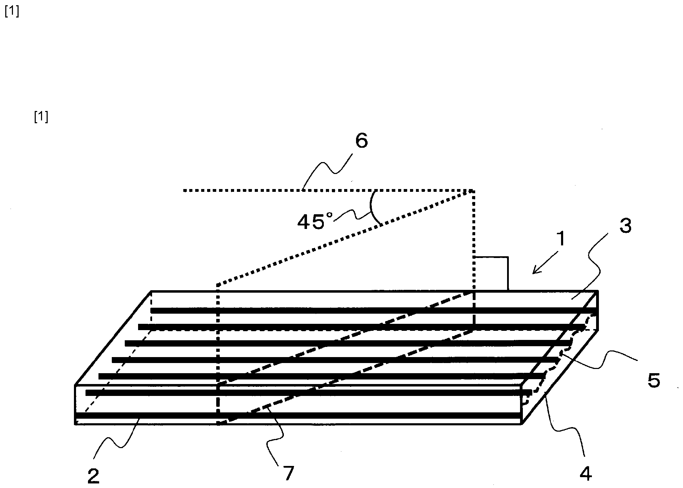

Using the prepared hybrid prepreg, as shown in Fig. 1, the hybrid prepreg was cut perpendicularly to the planar direction of the hybrid prepreg at an angle of 45 degrees in a plan view of the hybrid prepreg with respect to a fiber direction 6 of reinforcing fibers 2 contained in a first thermoplastic resin layer 3 and a second thermoplastic resin layer 4 or a thermosetting resin layer 4 to obtain a test piece having an observed cross section 7. The obtained test piece was embedded in an epoxy resin, and the observed cross section was polished. 10 images at a magnification of 1000 times was photographed using an optical microscope in the obtained observed cross section. The state in any observation range of 500 um × 500 um in the obtained image is as shown in the schematic view of Fig. 2. In this observation screen 7, the first thermoplastic resin layer 3 and the second thermoplastic resin layer 4 or the thermosetting resin layer 4 form an interface 5. Here, a perpendicular baseline 9 is drawn at intervals of 5 um from the resin layer 4 toward the resin layer 3 with the end portion on the resin layer 4 side as a reference line 8. Points at which the perpendicular baseline 9 drawn from the reference line 8 intersects the first thermoplastic resin layer 3 are plotted, and a line connecting the plotted points is defined as a cross section curve 10. The obtained cross section curve 10 was subjected to filtering processing in accordance with JIS B0601 (2001), and the roughness average height Rc and the roughness average length RSm of the cross section curve 10 were calculated. The roughness average height Rc and the roughness average length RSm were similarly calculated from the obtained 10 images, and the mean value was taken as each value.

### (6) Calculation of % by mass of each constituting unit in thermoplastic resin layer

A predetermined amount of the thermoplastic resin layer collected from the prepreg was used as a measurement sample, and solid NMR (AVANCE III 400 manufactured by Bruker Corporation) measurement was performed to calculate the mass ratio of each constituting unit of the thermoplastic resin, the thermosetting resin, and the curing agent.

### (7) Electron microscope observation of prepreg

- Confirmation of miscibility between thermoplastic resin and reaction product [A] and observation of structure of mixture of thermoplastic resin and reaction product [A]
- Confirmation of miscibility between reaction product [A] and reaction product [B]
- Confirmation of miscibility between thermoplastic resin and bifunctional or higher functional thermosetting resin monomer or prepolymer and/or bifunctional or higher functional curing agent

The prepared prepreg is sliced, then stained, a transmitted electron image is acquired at an appropriate magnification at an acceleration voltage of 100 kV using a transmission electron microscope (manufactured by Hitachi, Ltd., H-7100), and the presence or absence of a phase-separated structure is confirmed to confirm miscibility. Here, a sample in which a phase-separated structure was not confirmed was defined as "miscible", and a sample in which a phase-separated structure was confirmed was defined as "phase separation", and the results were shown in Tables 2 to 4 and Tables 6 to 11. As the dyeing agent, OsO₄ and RuO₄ were selectively used according to the resin composition to impart a sufficient contrast to the morphology. In addition, the appropriate magnification was 50000 times when the structural period was 1 nm or more and less than 10 nm, 20000 times when the structural period was 10 nm or more and less than 100 nm, 2000 times when the structural period was 100 nm or more and less than 1000 nm, and 1000 times when the structural period was 1000 nm or more.

### (8) Confirmation of existence of reaction products [A] and [B] in prepreg

Gel permeation chromatography (GPC) using hexafluoroisopropanol as an eluent was used to confirm the presence of the reaction products [A] and [B] in the prepreg. A sample obtained by extracting a resin composition from a predetermined amount of prepreg using hexafluoroisopropanol was used as a measurement sample, a chromatogram of the extract was compared with a mixture of each raw material before mixing, and the occurrence of an increase in the peak area was determined for a peak derived from a reaction product.

### (9) Evaluation of solubility in solvent

100 mg of the reaction product [B] was stirred and mixed with 20 g of hexafluoroisopropanol at 30°C, and the appearance of the resulting solution was visually confirmed. The case where a solution without visual separation was obtained was defined as "soluble", the case where separation was confirmed was defined as "insoluble", and the results are shown in Table 5.

### (10) Confirmation of crosslinked structure

100 mg of each raw material of the reaction product [B] and the reaction product [B] were stirred and mixed respectively with 20 g of hexafluoroisopropanol at 30°C, and the appearance of the obtained solution was visually confirmed. In a case where the separation is not confirmed visually in the solution of each raw material, when separation is confirmed visually in the solution of the reaction product [B], the crosslinked structure is determined to be "present", when separation is not confirmed visually in the solution of the reaction product [B], the crosslinked structure is determined to be "absent", and the results are shown in Table 5.

### <Examples and Comparative Examples>

### [Example 1]

Using carbon fiber T800S as a reinforcing fiber, "AMILAN (registered trademark)" CM1007 as a thermoplastic resin, and A-1 shown in Table 1 as a reaction product [A], a prepreg was prepared as follows.

The thermoplastic resin and the reaction product A-1 were charged into a mixing apparatus in the proportions shown in Table 2, and heated and mixed at 260°C for 5 minutes to obtain a mixture of the thermoplastic resin and the reaction product [A]. Here, % by mass of the thermoplastic resin corresponds to % by mass of the constituting unit of the thermoplastic resin with respect to 100% by mass of the total amount of the constituting unit of the thermoplastic resin, the constituting unit of the thermosetting resin, and the constituting unit of the curing agent. In addition, % by mass of the reaction product [A] corresponds to the total amount of % by mass of the constituting unit of the thermosetting resin and the constituting unit of the curing agent with respect to 100% by mass of the total amount of the constituting unit of the thermoplastic resin, the constituting unit of the thermosetting resin, and the constituting unit of the curing agent.

Next, a reinforcing fiber sheet (areal weight: 190 g/m²) in which reinforcing fibers were aligned in one direction was drawn out, and an aqueous dispersion of the mixture obtained by cryo-milling was applied (areal weight of the mixture obtained by cryo-milling: 100 g/m²) and dried. Thereafter, heat rolling was performed at a temperature of the melting point of the thermoplastic resin +25°C, and the mixture was impregnated into the continuous reinforcing fiber sheet while being heated and pressurized to obtain a prepreg.

Further, according to the above (2), the laminated prepreg was heated at 260°C for 12 minutes under a pressure of 1 MPa with a press machine to prepare a fiber-reinforced resin molded article. A pressure of 1 MPa was applied to the obtained fiber-reinforced resin molded article, and the fiber-reinforced resin molded article was held at 250°C for 6 minutes to weld the superimposed surfaces, thereby obtaining an integrated product for evaluation of tensile shear joint strength.

Table 2 shows evaluation results of physical properties and the like of the prepreg, the fiber-reinforced resin molded article, and the integrated product.

### [Example 2]

Except that the mixing time of the thermoplastic resin and reaction product A-1 was changed from 5 minutes to 30 minutes, as in the same manner as in Example 1, a prepreg, a fiber-reinforced resin molded article, and an integrated product were prepared.

Table 2 shows evaluation results of physical properties and the like of the prepreg, the fiber-reinforced resin molded article, and the integrated product.

### [Examples 3 to 6]

Except that as the reaction product [A], A-2 to A-5 shown in Table 1 were used, in the same manner as in Example 1, a prepreg, a fiber-reinforced resin molded article, and an integrated product were prepared.

Table 2 shows evaluation results of physical properties and the like of the prepreg, the fiber-reinforced resin molded article, and the integrated product.

### [Example 7]

Using T800S as a reinforcing fiber, "AMILAN (registered trademark)" CM1007 as a thermoplastic resin, "jER (registered trademark)" 828 as a bifunctional or higher functional thermosetting resin monomer or prepolymer, and SEIKACURE-S as a bifunctional or higher functional curing agent, a prepreg was prepared as follows.

A thermoplastic resin, a bifunctional or higher functional thermosetting resin monomer or prepolymer, and a bifunctional or higher functional curing agent were charged into a mixing apparatus in the proportions shown in Table 3, and heated and mixed at 260°C for 5 minutes to obtain a mixture of the thermoplastic resin and the reaction product [A] .

Next, a reinforcing fiber sheet (areal weight: 190 g/m²) in which reinforcing fibers were aligned in one direction was drawn out, and an aqueous dispersion of the mixture obtained by cryo-milling was applied (areal weight of the mixture obtained by cryo-milling: 100 g/m²) and dried. Thereafter, heat rolling was performed at a temperature of the melting point of the thermoplastic resin +25°C, and the mixture was impregnated into the continuous reinforcing fiber sheet while being heated and pressurized to obtain a prepreg.

Further, according to the above (2), the laminated prepreg was heated at 260°C for 12 minutes under a pressure of 1 MPa with a press machine to prepare a fiber-reinforced resin molded article. A pressure of 1 MPa was applied to the obtained fiber-reinforced resin molded article, and the fiber-reinforced resin molded article was held at 250°C for 6 minutes to weld the superimposed surfaces, thereby obtaining an integrated product for evaluation of tensile shear joint strength.

Table 3 shows evaluation results of physical properties and the like of the prepreg, the fiber-reinforced resin molded article, and the integrated product.

### [Example 8]

Except that "jER (registered trademark)" 828 and "SUMI-EPOXY (registered trademark)" ELM 434 were used as a bifunctional or higher functional thermosetting resin monomer or prepolymer, in the same manner as in Example 7, a prepreg, a fiber-reinforced resin molded article, and an integrated product were prepared.

Table 3 shows evaluation results of physical properties and the like of the prepreg, the fiber-reinforced resin molded article, and the integrated product.

### [Examples 9 to 10]

Except that the proportions of the thermoplastic resin and the reaction product [A] were set to % by mass shown in Table 3 with respect to 100% by mass of the total amount of the thermoplastic resin and the reaction product [A], in the same manner as in Example 3, a prepreg, a fiber-reinforced resin molded article, and an integrated product were prepared.

Table 3 shows evaluation results of physical properties and the like of the prepreg, the fiber-reinforced resin molded article, and the integrated product.

### [Examples 11 and 12]

Except that as the reaction product [A], A-6 to A-7 shown in Table 1 were used, in the same manner as in Example 1, a prepreg, a fiber-reinforced resin molded article, and an integrated product were prepared.

Table 3 shows evaluation results of physical properties and the like of the prepreg, the fiber-reinforced resin molded article, and the integrated product.

### [Example 13]

Using carbon fiber T800S as a reinforcing fiber, "AMILAN (registered trademark)" CM1007 as a thermoplastic resin, "KEPSTAN (registered trademark)" 7002 as a thermoplastic resin used for the second thermoplastic resin layer, and A-4 shown in Table 1 as a reaction product [A], a hybrid prepreg was prepared as follows.

A reinforced fiber sheet (areal weight: 190 g/m²) in which reinforcing fibers were aligned in one direction was drawn out, a film (areal weight: 50 g/m²) made of a thermoplastic resin used for the second thermoplastic resin layer was disposed on one surface of the continuous fiber sheet, heating was performed with an IR heater to melt the thermoplastic resin used for the second thermoplastic resin layer, the thermoplastic resin was allowed to adhere to the entire one surface of the continuous reinforcing fiber sheet, and the continuous reinforcing fiber sheet was pressurized with 3 pairs of nip rolls kept at a temperature 100°C lower than the melting point of the thermoplastic resin used for the second thermoplastic resin layer to impregnate the reinforced fiber sheet, thereby obtaining a semi-preg in which the fiber-reinforced sheet was exposed on the other surface.

Next, the thermoplastic resin and the reaction product A-4 were charged into a mixing apparatus in the proportions shown in Table 4, and heated and mixed at 260°C for 5 minutes to obtain a mixture of the thermoplastic resin and the reaction product [A]. The aqueous dispersion of the mixture obtained by cryo-milling was applied to the other surface of the obtained semi-preg (areal weight of the mixture obtained by cryo-milling: 100 g/m²), and heat rolling was performed at a temperature of the melting point of the thermoplastic resin +25°C to impregnate the continuous reinforcing fiber sheet with the mixture while heating and pressurizing, thereby obtaining a hybrid prepreg.

Furthermore, according to the above (2), the laminated hybrid prepreg was heated at 366°C for 12 minutes under a pressure of 1 MPa with a press machine to prepare a fiber-reinforced resin molded article. A pressure of 1 MPa was applied to the obtained fiber-reinforced resin molded article, and the fiber-reinforced resin molded article was held at 250°C for 6 minutes to weld the superimposed surfaces, thereby obtaining an integrated product for evaluation of tensile shear joint strength.

Table 4 shows evaluation results of physical properties and the like of the hybrid prepreg, the fiber-reinforced resin molded article, and the integrated product.

### [Example 14]

Using carbon fiber T800S as a reinforcing fiber, "AMILAN (registered trademark)" CM1007 as a thermoplastic resin, A-4 shown in Table 1 as a reaction product [A], and a composition shown in Table 4 as a thermosetting resin composition, a hybrid prepreg was prepared as follows.

The thermoplastic resin and the reaction product A-4 were charged into a mixing apparatus in the proportions shown in Table 4, and heated and mixed at 260°C for 5 minutes to obtain a mixture of the thermoplastic resin and the reaction product [A]. A reinforced fiber sheet (areal weight: 190 g/m²) in which reinforcing fibers were aligned in one direction was drawn out, the mixture obtained by cryo-milling was sprayed on one side of the reinforcing fiber sheet (areal weight of the mixture obtained by cryo-milling was 100 g/m²), heating was performed with an IR heater to melt the mixture, the mixture was allowed to adhere to the entire one surface of the continuous reinforcing fiber sheet, and the continuous reinforcing fiber sheet was pressurized with 3 pairs of nip rolls kept at a temperature 100°C lower than the melting point or the glass transition temperature of the thermoplastic resin to impregnate the reinforced fiber sheet, thereby obtaining a semi-preg in which the fiber-reinforced sheet was exposed on the other surface.

Next, a film formed of an uncured thermosetting resin composition (areal weight: 50 g/m²) was superimposed on the other surface of the obtained semi-preg, and heat rolling was performed to impregnate the continuous reinforcing fiber sheet with the film formed of the uncured thermosetting resin composition while heating and pressurizing to obtain a hybrid prepreg.

Furthermore, 2 sheets obtained by cutting the obtained hybrid prepreg into a predetermined size and 6 sheets obtained by cutting the thermosetting prepreg prepared by the above method into a similar shape were prepared, and the prepreg was laminated such that the outermost layer was the 2 hybrid prepregs (the outermost surface was the thermoplastic resin layer) and the inner layer was the thermosetting prepreg in a configuration of [0°/90°]₂ₛ (symbol S indicates mirror symmetry), defining the axial direction of the reinforcing fiber as 0° and the axis orthogonal direction as 90°.

According to the above (2), except that a fiber-reinforced resin molded article was prepared by applying a pressure of 1 MPa to the laminated prepreg with a press machine and heating the prepreg at 230°C for 12 minutes, a pressure of 1 MPa was applied to the obtained fiber-reinforced resin molded article and the fiber-reinforced resin molded article was held at 250°C for 6 minutes, and accordingly, the superimposed surfaces were welded to obtain an integrated product for evaluation of tensile shear joint strength.

Table 4 shows evaluation results of physical properties and the like of the hybrid prepreg, the fiber-reinforced resin molded article, and the integrated product.

### [Examples 15 and 17]

Except that as the reaction product [A], A-6 and A-7 shown in Table 1 were used, in the same manner as in Example 13, a hybrid prepreg, a fiber-reinforced resin molded article, and an integrated product were prepared.

Table 4 shows evaluation results of physical properties and the like of the hybrid prepreg, the fiber-reinforced resin molded article, and the integrated product.

### [Example 16]

Except that A-6 shown in Table 1 was used as a reaction product [A], and a pressure of 1 MPa was applied to the laminated prepreg with a press machine and heated at 180°C for 1 hour and then at 230°C for 1 hour to prepare a fiber-reinforced resin molded article, in the same manner as in Example 14, a hybrid prepreg, a fiber-reinforced resin molded article, and an integrated product were prepared.

Table 4 shows evaluation results of physical properties and the like of the hybrid prepreg, the fiber-reinforced resin molded article, and the integrated product.

### [Example 18]

Except that A-7 shown in Table 1 was used as a reaction product [A], and a pressure of 1 MPa was applied to the laminated prepreg with a press machine and heated at 140°C for 1 hour, then at 180°C for 1 hour, and further at 230°C for 1 hour to prepare a fiber-reinforced resin molded article, in the same manner as in Example 14, a hybrid prepreg, a fiber-reinforced resin molded article, and an integrated product were prepared.

Table 4 shows evaluation results of physical properties and the like of the hybrid prepreg, the fiber-reinforced resin molded article, and the integrated product.

### [Comparative Example 1]

Using carbon fiber T800S as a reinforcing fiber, and "AMILAN (registered trademark)" CM1007 as a thermoplastic resin, a prepreg was prepared as follows.

A reinforcing fiber sheet (areal weight: 190 g/m²) in which reinforcing fibers were aligned in one direction was drawn out, and an aqueous dispersion of the thermoplastic resin obtained by cryo-milling was applied (areal weight of the reaction product obtained by cryo-milling: 100 g/m²) and dried. Thereafter, heat rolling was performed at a temperature of the melting point of the thermoplastic resin +25°C, and the thermoplastic resin was impregnated into the continuous reinforcing fiber sheet while being heated and pressurized to obtain a prepreg.

Further, according to the above (2), the laminated prepreg was heated at 260°C for 12 minutes under a pressure of 1 MPa with a press machine to prepare a fiber-reinforced resin molded article. A pressure of 1 MPa was applied to the obtained fiber-reinforced resin molded article, and the fiber-reinforced resin molded article was held at 250°C for 6 minutes to weld the superimposed surfaces, thereby obtaining an integrated product for evaluation of tensile shear joint strength.

Table 2 shows evaluation results of physical properties and the like of the prepreg, the fiber-reinforced resin molded article, and the integrated product.

### [Comparative Examples 2 and 3]

Except that the proportions of the thermoplastic resin and the reaction product [A] were set to % by mass shown in Table 3 with respect to 100% by mass of the total amount of the thermoplastic resin and the reaction product [A], in the same manner as in Example 3, a prepreg, a fiber-reinforced resin molded article, and an integrated product were prepared.

Table 3 shows evaluation results of physical properties and the like of the prepreg, the fiber-reinforced resin molded article, and the integrated product.

Comparison of Examples 1 to 10 with Comparative Example 1 shows that when the thermoplastic resin layer contains, in the form of the reaction product [A], 65.0 to 99.5% by mass of the constituting unit of the thermoplastic resin and 0.5 to 35.0% by mass in total of the constituting unit of the thermosetting resin and the constituting unit of the curing agent with respect to 100% by mass of the total amount of the constituting unit of the thermoplastic resin, the constituting unit of the thermosetting resin, and the constituting unit of the curing agent, the balance between the dimensional stability at the time of welding and the tensile shear joint strength at 23°C is excellent, but when the thermoplastic resin layer does not contain the reaction product [A] or the content of each constituting unit is out of the above range, either the tensile shear joint strength at 23°C or the dimensional stability at the time of welding fails.

From the results of Examples 11 to 16, it is found that the hybrid prepreg in which the reaction product [A] is contained in the thermoplastic resin layer and the content of each constituting unit satisfies the above range is excellent in the balance between the dimensional stability at the time of welding and the tensile shear joint strength at 23°C.

### [Example 19]

Using carbon fiber T800S as a reinforcing fiber and B-1 shown in Table 5 as a reaction product [B], a prepreg was prepared as follows.

A reinforcing fiber sheet (areal weight: 190 g/m²) in which reinforcing fibers were aligned in one direction was drawn out, and an aqueous dispersion of B-1 obtained by cryo-milling was applied (areal weight of the reaction product obtained by cryo-milling: 100 g/m²) and dried. Thereafter, heat rolling was performed at a temperature of the melting point of the thermoplastic resin (which is the raw material of B-1) +25°C, and the reaction product was impregnated into the continuous reinforcing fiber sheet while being heated and pressurized to obtain a prepreg.

Further, according to the above (2), the laminated prepreg was heated at 260°C for 12 minutes under a pressure of 1 MPa with a press machine to prepare a fiber-reinforced resin molded article. A pressure of 1 MPa was applied to the obtained fiber-reinforced resin molded article, and the fiber-reinforced resin molded article was held at 250°C for 6 minutes to weld the superimposed surfaces, thereby obtaining an integrated product for evaluation of tensile shear joint strength.

Table 6 shows evaluation results of physical properties and the like of the prepreg, the fiber-reinforced resin molded article, and the integrated product.

### [Examples 20 to 24]

Except that as the reaction product [B], B-2 to B-6 shown in Table 5 were used, in the same manner as in Example 19, a prepreg, a fiber-reinforced resin molded article, and an integrated product were prepared.

Table 6 shows evaluation results of physical properties and the like of the prepreg, the fiber-reinforced resin molded article, and the integrated product.

### [Example 25]

Using carbon fiber T800S as a reinforcing fiber, B-1 shown in Table 5 as a reaction product [B], "jER (registered trademark)" 828 as a bifunctional or higher functional thermosetting resin monomer or prepolymer, and SEIKACURE-S as a bifunctional or higher functional curing agent, a prepreg was prepared as follows.

B-1, a bifunctional or higher functional thermosetting resin monomer or prepolymer and a bifunctional or higher functional curing agent were charged into a mixing apparatus in the proportions shown in Table 6, and heated and mixed at 260°C for 5 minutes to obtain a mixture consisting of B-1, a reaction product [A] of the bifunctional or higher functional thermosetting resin monomer or prepolymer and the bifunctional or higher functional curing agent. A reinforcing fiber sheet (areal weight: 190 g/m²) in which reinforcing fibers were aligned in one direction was drawn out, and an aqueous dispersion of the mixture obtained by cryo-milling was applied (areal weight of the mixture obtained by cryo-milling: 100 g/m²) and dried. Thereafter, heat rolling was performed at a temperature of the melting point of the thermoplastic resin (which is the raw material of B-1) +25°C, and the mixture was impregnated into the continuous reinforcing fiber sheet while being heated and pressurized to obtain a prepreg.

Further, according to the above (2), the laminated prepreg was heated at 260°C for 12 minutes under a pressure of 1 MPa with a press machine to prepare a fiber-reinforced resin molded article. A pressure of 1 MPa was applied to the obtained fiber-reinforced resin molded article, and the fiber-reinforced resin molded article was held at 250°C for 6 minutes to weld the superimposed surfaces, thereby obtaining an integrated product for evaluation of tensile shear joint strength.

Table 6 shows evaluation results of physical properties and the like of the prepreg, the fiber-reinforced resin molded article, and the integrated product.

### [Examples 26 to 29]

Except that as the reaction product [B], B-7, B-8, B-11, and B-12 shown in Table 5 were used, in the same manner as in Example 19, a prepreg, a fiber-reinforced resin molded article, and an integrated product were prepared.

Table 7 shows evaluation results of physical properties and the like of the prepreg, the fiber-reinforced resin molded article, and the integrated product.

### [Comparative Examples 4 and 5]

Except that as the reaction product [B], B-9 and B-10 shown in Table 5 were used, in the same manner as in Example 19, a prepreg, a fiber-reinforced resin molded article, and an integrated product were prepared.

Table 7 shows evaluation results of physical properties and the like of the prepreg, the fiber-reinforced resin molded article, and the integrated product.

### [Example 30]

Using carbon fiber T800S as a reinforcing fiber, B-5 shown in Table 5 as a reaction product [B], and "KEPSTAN (registered trademark)" 7002 as a thermoplastic resin used for the second thermoplastic resin layer, a hybrid prepreg was prepared as follows.

A reinforced fiber sheet (areal weight: 190 g/m²) in which reinforcing fibers were aligned in one direction was drawn out, a film (areal weight: 50 g/m²) made of a thermoplastic resin used for the second thermoplastic resin layer was disposed on one surface of the continuous fiber sheet, heating was performed with an IR heater to melt the thermoplastic resin used for the second thermoplastic resin layer, the thermoplastic resin was allowed to adhere to the entire one surface of the continuous reinforcing fiber sheet, and the continuous reinforcing fiber sheet was pressurized with 3 pairs of nip rolls kept at a temperature 100°C lower than the melting point of the thermoplastic resin used for the second thermoplastic resin layer to impregnate the reinforced fiber sheet, thereby obtaining a semi-preg in which the fiber-reinforced sheet was exposed on the other surface.

Next, the aqueous dispersion of the reaction product [B] obtained by cryo-milling was applied to the other surface of the obtained semi-preg (areal weight of the mixture obtained by cryo-milling: 100 g/m²), and heat rolling was performed at a temperature of the melting point of the thermoplastic resin (which is the raw material of B-5) +25°C to impregnate the continuous reinforcing fiber sheet with the mixture while heating and pressurizing, thereby obtaining a hybrid prepreg.

Furthermore, according to the above (2), the laminated hybrid prepreg was heated at 366°C for 12 minutes under a pressure of 1 MPa with a press machine to prepare a fiber-reinforced resin molded article. A pressure of 1 MPa was applied to the obtained fiber-reinforced resin molded article, and the fiber-reinforced resin molded article was held at 250°C for 6 minutes to weld the superimposed surfaces, thereby obtaining an integrated product for evaluation of tensile shear joint strength.

Table 8 shows evaluation results of physical properties and the like of the hybrid prepreg, the fiber-reinforced resin molded article, and the integrated product.

### [Example 31]

Using carbon fiber T800S as a reinforcing fiber, B-5 shown in Table 5 as a reaction product [B], and a composition shown in Table 8 as a thermosetting resin composition, a hybrid prepreg was prepared as follows.

A reinforced fiber sheet (areal weight: 190 g/m²) in which reinforcing fibers were aligned in one direction was drawn out, the mixture obtained by cryo-milling was sprayed on one side of the reinforcing fiber sheet (areal weight of the mixture obtained by cryo-milling was 100 g/m²), heating was performed with an IR heater to melt the mixture, the mixture was allowed to adhere to the entire one surface of the continuous reinforcing fiber sheet, and the continuous reinforcing fiber sheet was pressurized with 3 pairs of nip rolls kept at a temperature 100°C lower than the melting point or the glass transition temperature of the thermoplastic resin (which is the raw material of B-5) to impregnate the reinforced fiber sheet, thereby obtaining a semi-preg in which the fiber-reinforced sheet was exposed on the other surface.

Next, a film formed of an uncured thermosetting resin composition (areal weight: 50 g/m²) was superimposed on the other surface of the obtained semi-preg, and heat rolling was performed to impregnate the continuous reinforcing fiber sheet with the film formed of the uncured thermosetting resin composition while heating and pressurizing to obtain a hybrid prepreg.

Furthermore, 2 sheets obtained by cutting the obtained hybrid prepreg into a predetermined size and 6 sheets obtained by cutting the thermosetting prepreg prepared by the above method into a similar shape were prepared, and the prepreg was laminated such that the outermost layer was the 2 hybrid prepregs (the outermost surface was the layer containing the reaction product [B]) and the inner layer was the thermosetting prepreg in a configuration of [0°/90°]₂ₛ (symbol S indicates mirror symmetry), defining the axial direction of the reinforcing fiber as 0° and the axis orthogonal direction as 90°.

According to the above (2), except that a fiber-reinforced resin molded article was prepared by applying a pressure of 1 MPa to the laminated prepreg with a press machine and heating the prepreg at 230°C for 12 minutes, a pressure of 1 MPa was applied to the obtained fiber-reinforced resin molded article and the fiber-reinforced resin molded article was held at 250°C for 6 minutes, and accordingly, the superimposed surfaces were welded to obtain an integrated product for evaluation of tensile shear joint strength.

Table 8 shows evaluation results of physical properties and the like of the hybrid prepreg, the fiber-reinforced resin molded article, and the integrated product.

### [Examples 32 and 34]

Except that as the reaction product [B], B-11 and B-12 shown in Table 5 were used, in the same manner as in Example 30, a hybrid prepreg, a fiber-reinforced resin molded article, and an integrated product were prepared.

Table 8 shows evaluation results of physical properties and the like of the hybrid prepreg, the fiber-reinforced resin molded article, and the integrated product.

### [Example 33]

Except that B-11 shown in Table 5 was used as a reaction product [B], and a pressure of 1 MPa was applied to the laminated prepreg with a press machine and heated at 180°C for 1 hour and then at 230°C for 1 hour to prepare a fiber-reinforced resin molded article, in the same manner as in Example 31, a hybrid prepreg, a fiber-reinforced resin molded article, and an integrated product were prepared.

Table 8 shows evaluation results of physical properties and the like of the hybrid prepreg, the fiber-reinforced resin molded article, and the integrated product.

### [Example 35]

Except that B-12 shown in Table 5 was used as a reaction product [B], and a pressure of 1 MPa was applied to the laminated prepreg with a press machine and heated at 140°C for 1 hour, then at 180°C for 1 hour, and further at 230°C for 1 hour to prepare a fiber-reinforced resin molded article, in the same manner as in Example 31, a hybrid prepreg, a fiber-reinforced resin molded article, and an integrated product were prepared.

Table 8 shows evaluation results of physical properties and the like of the hybrid prepreg, the fiber-reinforced resin molded article, and the integrated product.

Comparison of Examples 19 to 29 with Comparative Examples 1, 4, and 5 shows that when the thermoplastic resin layer contains, in the form of the reaction product [B], 65.0 to 99.5% by mass of the constituting unit of the thermoplastic resin and 0.5 to 35.0% by mass in total of the constituting unit of the thermosetting resin and the constituting unit of the curing agent with respect to 100% by mass of the total amount of the constituting unit of the thermoplastic resin, the constituting unit of the thermosetting resin, and the constituting unit of the curing agent, the balance between the dimensional stability at the time of welding and the tensile shear joint strength at 23°C is excellent, but when the thermoplastic resin layer does not contain the reaction product [B] or the content of each constituting unit is out of the above range, either the tensile shear joint strength at 23°C or the dimensional stability at the time of welding fails.

From the results of Examples 30 to 35, it is found that the hybrid prepreg in which the reaction product [B] is contained in the thermoplastic resin layer and the content of each constituting unit satisfies the above range is excellent in the balance between the dimensional stability at the time of welding and the tensile shear joint strength at 23°C.

### [Example 36]

Using carbon fiber T800S as a reinforcing fiber, "AMILAN (registered trademark)" CM1007 as a thermoplastic resin, and "jER (registered trademark)" 828 as a bifunctional or higher functional thermosetting resin monomer or prepolymer, a prepreg was prepared as follows.

"jER (registered trademark)" 828 was warmed to 50°C and applied using a coater onto a film (50 g/m²) consisting of "AMILAN (registered trademark)" CM1007. In the case of using two or more types of bifunctional or higher functional thermosetting resin monomers or prepolymers, or in the case of using one or more types of bifunctional or higher functional thermosetting resin monomers or prepolymers and other components, the bifunctional or higher functional thermosetting resin monomers or prepolymers and other components (only in the case of using) were put in a kneader in advance, and heated and mixed at 50°C to obtain a mixture, and then the mixture was applied onto a film made of a thermoplastic resin using a coater. Since "SUMIKAEXCEL (registered trademark)" PES5003P used in Examples 42 and 44 is a powder, "SUMIKAEXCEL" was charged into a kneader together with a bifunctional or higher functional thermosetting resin monomer or a prepolymer and mixed. At this time, 90.0% by mass of the thermoplastic resin and 10.0% by mass of the bifunctional or higher functional thermosetting resin monomer or prepolymer were contained with respect to 100% by mass of the total amount of the thermoplastic resin and the bifunctional or higher functional thermosetting resin monomer or prepolymer.

Next, a reinforcing fiber sheet (areal weight: 190 g/m²) in which reinforcing fibers were aligned in one direction was drawn out, the surface of the film coated with a bifunctional or higher functional thermosetting resin monomer or prepolymer was superimposed on both surfaces of the continuous reinforcing fiber sheet, heat rolling was performed at a temperature of the melting point of the thermoplastic resin +25°C, and the film was impregnated into the continuous reinforcing fiber sheet while being heated and pressurized to obtain a prepreg.

Further, according to the above (2), the laminated prepreg was heated at 260°C for 12 minutes under a pressure of 1 MPa with a press machine to prepare a fiber-reinforced resin molded article. A pressure of 1 MPa was applied to the obtained fiber-reinforced resin molded article, and the fiber-reinforced resin molded article was held at 250°C for 6 minutes to weld the superimposed surfaces, thereby obtaining an integrated product for evaluation of tensile shear joint strength.

Table 9 shows evaluation results of physical properties and the like of the prepreg, the fiber-reinforced resin molded article, and the integrated product.

### [Example 37]

Except that 0.1% by mass of EPTS was used as the other component with respect to 100% by mass of the total amount of the thermoplastic resin and the bifunctional or higher functional thermosetting resin monomer or prepolymer, in the same manner as in Example 36, a prepreg, a fiber-reinforced resin molded article, and an integrated product were prepared.

Table 9 shows evaluation results of physical properties and the like of the prepreg, the fiber-reinforced resin molded article, and the integrated product.

### [Example 38]

Next, except that a reinforcing fiber sheet (areal weight: 190 g/m²) in which reinforcing fibers were aligned in one direction was drawn out, a film (areal weight: 50 g/m²) containing a reaction product of the above-described thermoplastic resin and a bifunctional or higher functional thermosetting resin monomer or prepolymer was superimposed on both surfaces of the continuous reinforcing fiber sheet, heat rolling was performed at a temperature of the melting point of the thermoplastic resin +25°C, and the film was impregnated into the continuous reinforcing fiber sheet while being heated and pressurized, in the same manner as in Example 36, a prepreg, a fiber-reinforced resin molded article, and an integrated product were prepared.

Table 9 shows evaluation results of physical properties and the like of the prepreg, the fiber-reinforced resin molded article, and the integrated product.

### [Comparative Example 6]

Except that the proportions of the thermoplastic resin and the bifunctional or higher functional thermosetting resin monomer or prepolymer were set to be % by mass shown in Table 9 with respect to 100% by mass of the total amount of the thermoplastic resin and the bifunctional or higher functional thermosetting resin monomer or prepolymer, in the same manner as in Example 36, a prepreg, a fiber-reinforced resin molded article, and an integrated product were prepared.

Table 9 shows evaluation results of physical properties and the like of the prepreg, the fiber-reinforced resin molded article, and the integrated product.

### [Example 39]

Using T800S as a reinforcing fiber, "AMILAN (registered trademark)" CM1007 as a thermoplastic resin, "jER (registered trademark)" 828 as a bifunctional or higher functional thermosetting resin monomer or prepolymer, and SEIKACURE-S as a bifunctional or higher functional curing agent, in the same manner as Example 36, a prepreg was prepared. At this time, 65.0% by mass of the thermoplastic resin, 25.9% by mass of the bifunctional or higher functional thermosetting resin monomer or prepolymer, and 9.1% by mass of the bifunctional of higher functional curing agent were contained with respect to 100% by mass of the total amount of the thermoplastic resin, the bifunctional or higher functional thermosetting resin monomer or prepolymer, and the bifunctional or higher functional curing agent. In addition, the proportions of the bifunctional or higher functional thermosetting resin monomer or prepolymer and the bifunctional or higher functional curing agent were set to 74% by mass and 26% by mass, respectively, with respect to 100% by mass of the total amount of the bifunctional or higher functional thermosetting resin monomer or prepolymer and the bifunctional or higher functional curing agent. Further, according to the above (2), the laminated prepreg was heated at 260°C for 12 minutes under a pressure of 1 MPa with a press machine to prepare a fiber-reinforced resin molded article. A pressure of 1 MPa was applied to the obtained fiber-reinforced resin molded article, and the fiber-reinforced resin molded article was held at 250°C for 6 minutes to weld the superimposed surfaces, thereby obtaining an integrated product for evaluation of tensile shear joint strength.

Table 9 shows evaluation results of physical properties and the like of the prepreg, the fiber-reinforced resin molded article, and the integrated product.

### [Examples 40 and 41]

Except that the proportions of the thermoplastic resin, the bifunctional or higher functional thermosetting resin monomer or prepolymer, and the bifunctional or higher functional curing agent were set to be % by mass shown in Table 9 with respect to 100% by mass of the total amount of the thermoplastic resin, the bifunctional or higher functional thermosetting resin monomer or prepolymer, and the bifunctional or higher functional curing agent, in the same manner as in Example 39, a prepreg, a fiber-reinforced resin molded article, and an integrated product were prepared.

Table 9 shows evaluation results of physical properties and the like of the prepreg, the fiber-reinforced resin molded article, and the integrated product.

### [Example 42]

Except that "AMILAN (registered trademark)" CM1007 and "SUMIKAEXCEL (registered trademark)" PES5003P were used as a thermoplastic resin, and the proportions of the thermoplastic resin, the bifunctional or higher functional thermosetting resin monomer or prepolymer, and the bifunctional or higher functional curing agent were set to be % by mass shown in Table 9 with respect to 100% by mass of the total amount of the thermoplastic resin, the bifunctional or higher functional thermosetting resin monomer or prepolymer, and the bifunctional or higher functional curing agent, in the same manner as in Example 39, a prepreg, a fiber-reinforced resin molded article, and an integrated product were prepared.

Table 9 shows evaluation results of physical properties and the like of the prepreg, the fiber-reinforced resin molded article, and the integrated product.

### [Example 43]

A mixture of a bifunctional or higher functional thermosetting resin monomer or prepolymer diluted with isopropyl alcohol was applied in the form of a film made of a thermoplastic resin, and then isopropyl alcohol was removed by drying to obtain a film coated with the bifunctional or higher functional thermosetting resin monomer or prepolymer. At that time, the proportions of the thermoplastic resin, the bifunctional or higher functional thermosetting resin monomer or prepolymer, and the bifunctional of higher functional curing agent were adjusted to be % by mass shown in Table 9 with respect to 100% by mass of the total amount of the thermoplastic resin, the bifunctional or higher functional thermosetting resin monomer or prepolymer, and the bifunctional or higher functional curing agent. Except for the above, in the same manner as in Example 39, a prepreg, a fiber-reinforced resin molded article, and an integrated product were prepared.

Table 9 shows evaluation results of physical properties and the like of the prepreg, the fiber-reinforced resin molded article, and the integrated product.

### [Comparative Example 7]

Except that the proportions of the thermoplastic resin, the bifunctional or higher functional thermosetting resin monomer or prepolymer, and the bifunctional or higher functional curing agent were set to be % by mass shown in Table 9 with respect to 100% by mass of the total amount of the thermoplastic resin, the bifunctional or higher functional thermosetting resin monomer or prepolymer, and the bifunctional or higher functional curing agent, in the same manner as in Example 39, a prepreg, a fiber-reinforced resin molded article, and an integrated product were prepared.

Table 9 shows evaluation results of physical properties and the like of the prepreg, the fiber-reinforced resin molded article, and the integrated product.

### [Comparative Example 8]

Except that the proportions of the thermoplastic resin, the bifunctional or higher functional thermosetting resin monomer or prepolymer, and the bifunctional or higher functional curing agent were set to be % by mass shown in Table 9 with respect to 100% by mass of the total amount of the thermoplastic resin, the bifunctional or higher functional thermosetting resin monomer or prepolymer, and the bifunctional or higher functional curing agent, in the same manner as in Example 43, a prepreg, a fiber-reinforced resin molded article, and an integrated product were prepared.

Table 9 shows evaluation results of physical properties and the like of the prepreg, the fiber-reinforced resin molded article, and the integrated product.

### [Example 44]

Except that "jER (registered trademark)" 828 and "SUMI-EPOXY (registered trademark)" ELM434 were used as a bifunctional or higher functional thermosetting resin monomer, and the proportions of the thermoplastic resin, the bifunctional or higher functional thermosetting resin monomer or prepolymer, and the bifunctional or higher functional curing agent were set to be % by mass shown in Table 10 with respect to 100% by mass of the total amount of the thermoplastic resin, the bifunctional or higher functional thermosetting resin monomer or prepolymer, and the bifunctional or higher functional curing agent, in the same manner as in Example 42, a prepreg, a fiber-reinforced resin molded article, and an integrated product were prepared.

Table 10 shows evaluation results of physical properties and the like of the prepreg, the fiber-reinforced resin molded article, and the integrated product.

### [Example 45]

Except that DICY7 was used as a bifunctional or higher functional curing agent, and the proportions of the thermoplastic resin, the bifunctional or higher functional thermosetting resin monomer or prepolymer, and the bifunctional or higher functional curing agent were set to be % by mass shown in Table 10 with respect to 100% by mass of the total amount of the thermoplastic resin, the bifunctional or higher functional thermosetting resin monomer or prepolymer, and the bifunctional or higher functional curing agent, in the same manner as in Example 41, a prepreg, a fiber-reinforced resin molded article, and an integrated product were prepared.

Table 10 shows evaluation results of physical properties and the like of the prepreg, the fiber-reinforced resin molded article, and the integrated product.

### [Example 46]

Except that "AMILAN (registered trademark)" CM1007 was used as a thermoplastic resin, benzoxazine resin F-a was used as a bifunctional or higher functional thermosetting resin monomer or prepolymer, "Araldite (registered trademark) MY0610 was used as a bifunctional or higher functional curing agent, and the proportions of the thermoplastic resin, the bifunctional or higher functional thermosetting resin monomer or prepolymer, and the bifunctional or higher functional curing agent were set to be % by mass shown in Table 10 with respect to 100% by mass of the total amount of the thermoplastic resin, the bifunctional or higher functional thermosetting resin monomer or prepolymer, and the bifunctional or higher functional curing agent, in the same manner as in Example 39, a prepreg, a fiber-reinforced resin molded article, and an integrated product were prepared.

Table 10 shows evaluation results of physical properties and the like of the prepreg, the fiber-reinforced resin molded article, and the integrated product.

### [Example 47]

Except that "AMILAN (registered trademark)" CM1007 was used as a thermoplastic resin, "Compimide (registered trademark)" MDAB and "Compimide (registered trademark)" TDAB were used as a bifunctional or higher functional thermosetting resin monomer or prepolymer, "Compimide (registered trademark)" TM124 was used as a bifunctional or higher functional curing agent, and the proportions of the thermoplastic resin, the bifunctional or higher functional thermosetting resin monomer or prepolymer, and the bifunctional or higher functional curing agent were set to be % by mass shown in Table 10 with respect to 100% by mass of the total amount of the thermoplastic resin, the bifunctional or higher functional thermosetting resin monomer or prepolymer, and the bifunctional or higher functional curing agent, in the same manner as in Example 39, a prepreg, a fiber-reinforced resin molded article, and an integrated product were prepared.

Table 10 shows evaluation results of physical properties and the like of the prepreg, the fiber-reinforced resin molded article, and the integrated product.

### [Example 48]

Except that "AMILAN (registered trademark)" CM4000 was used as the thermoplastic resin, a fiber-reinforced resin molded article was prepared at 190°C, and an integrated product was produced at 180°C, in the same manner as in Example 41, a prepreg, a fiber-reinforced resin molded article, and an integrated product were prepared.

Table 10 shows evaluation results of physical properties and the like of the prepreg, the fiber-reinforced resin molded article, and the integrated product.

### [Comparative Example 9]

Except that the proportions of the thermoplastic resin, the bifunctional or higher functional thermosetting resin monomer or prepolymer, and the bifunctional or higher functional curing agent were set to be % by mass shown in Table 10 with respect to 100% by mass of the total amount of the thermoplastic resin, the bifunctional or higher functional thermosetting resin monomer or prepolymer, and the bifunctional or higher functional curing agent, in the same manner as in Example 48, a prepreg, a fiber-reinforced resin molded article, and an integrated product were prepared.

Table 10 shows evaluation results of physical properties and the like of the prepreg, the fiber-reinforced resin molded article, and the integrated product.

### [Example 49]

Except that "TORELINA (registered trademark)" A670T05 was used as the thermoplastic resin, a fiber-reinforced resin molded article was prepared at 313°C, and an integrated product was produced at 303°C, in the same manner as in Example 41, a prepreg, a fiber-reinforced resin molded article, and an integrated product were prepared.

Table 10 shows evaluation results of physical properties and the like of the prepreg, the fiber-reinforced resin molded article, and the integrated product.

### [Comparative Example 10]

Except that the proportions of the thermoplastic resin, the bifunctional or higher functional thermosetting resin monomer or prepolymer, and the bifunctional or higher functional curing agent were set to be % by mass shown in Table 10 with respect to 100% by mass of the total amount of the thermoplastic resin, the bifunctional or higher functional thermosetting resin monomer or prepolymer, and the bifunctional or higher functional curing agent, in the same manner as in Example 49, a prepreg, a fiber-reinforced resin molded article, and an integrated product were prepared.

Table 10 shows evaluation results of physical properties and the like of the prepreg, the fiber-reinforced resin molded article, and the integrated product.

### [Example 50]

Except that "KEPSTAN (registered trademark)" 7002 was used as the thermoplastic resin, a fiber-reinforced resin molded article was prepared at 366°C, and an integrated product was produced at 356°C, in the same manner as in Example 41, a prepreg, a fiber-reinforced resin molded article, and an integrated product were prepared.

Table 10 shows evaluation results of physical properties and the like of the prepreg, the fiber-reinforced resin molded article, and the integrated product.

### [Comparative Example 11]

Except that the proportions of the thermoplastic resin, the bifunctional or higher functional thermosetting resin monomer or prepolymer, and the bifunctional or higher functional curing agent were set to be % by mass shown in Table 10 with respect to 100% by mass of the total amount of the thermoplastic resin, the bifunctional or higher functional thermosetting resin monomer or prepolymer, and the bifunctional or higher functional curing agent, in the same manner as in Example 50, a prepreg, a fiber-reinforced resin molded article, and an integrated product were prepared.

Table 10 shows evaluation results of physical properties and the like of the prepreg, the fiber-reinforced resin molded article, and the integrated product.

### [Example 51]

Except that as reinforcing fibers, continuous E-glass fibers were used in place of the carbon fibers T800S, in the same manner as in Example 41, a prepreg was obtained.

Table 10 shows evaluation results of physical properties and the like of the prepreg, the fiber-reinforced resin molded article, and the integrated product.

### [Example 52]

Except that a carbon fiber fabric "TORAYCA (registered trademark)" cloth CK6273C was used as a reinforcing fiber in place of the reinforcing fiber sheet in which reinforcing fibers were aligned in one direction, in the same manner as in Example 41, a prepreg was obtained.

Table 10 shows evaluation results of physical properties and the like of the prepreg, the fiber-reinforced resin molded article, and the integrated product.

### [Example 53]

Using carbon fiber T800S as a reinforcing fiber, "AMILAN (registered trademark)" CM1007 as a thermoplastic resin, "KEPSTAN (registered trademark) 7002 as a thermoplastic resin used for the second thermoplastic resin layer, "jER (registered trademark)" 828 as a bifunctional or higher functional thermosetting resin monomer or prepolymer, and SEIKACURE-S as a bifunctional or higher functional curing agent, a hybrid prepreg was prepared as follows.

A reinforced fiber sheet (areal weight: 190 g/m²) in which reinforcing fibers were aligned in one direction was drawn out, a film (areal weight: 50 g/m²) made of a thermoplastic resin used for the second thermoplastic resin layer was disposed on one surface of the continuous fiber sheet, heating was performed with an IR heater to melt the thermoplastic resin used for the second thermoplastic resin layer, the thermoplastic resin was allowed to adhere to the entire one surface of the continuous reinforcing fiber sheet, and the continuous reinforcing fiber sheet was pressurized with 3 pairs of nip rolls kept at a temperature 100°C lower than the melting point of the thermoplastic resin used for the second thermoplastic resin layer to impregnate the reinforced fiber sheet, thereby obtaining a semi-preg in which the fiber-reinforced sheet was exposed on the other surface.

In the same manner as in Example 36, a bifunctional or higher functional thermosetting resin monomer or prepolymer and a bifunctional or higher functional curing agent were applied to a film (areal weight: 100 g/m²) made of a thermoplastic resin. At this time, 95.0% by mass of the thermoplastic resin, 3.7% by mass of the bifunctional or higher functional thermosetting resin monomer or prepolymer, and 1.3% by mass of the bifunctional of higher functional curing agent were contained with respect to 100% by mass of the total amount of the thermoplastic resin, the bifunctional or higher functional thermosetting resin monomer or prepolymer, and the bifunctional or higher functional curing agent. In addition, the proportions of the bifunctional or higher functional thermosetting resin monomer or prepolymer and the bifunctional or higher functional curing agent were set to 74% by mass and 26% by mass, respectively, with respect to 100% by mass of the total amount of the bifunctional or higher functional thermosetting resin monomer or prepolymer and the bifunctional or higher functional curing agent.

The surface of the film coated with the bifunctional or higher functional thermosetting resin monomer or prepolymer and the bifunctional or higher functional curing agent is superimposed on the other surface of the obtained semi-preg, heat rolling was performed at a temperature of the melting point of the thermoplastic resin +25°C, and the film was impregnated into the continuous reinforcing fiber sheet while being heated and pressurized to obtain a hybrid prepreg. Further, according to the above (2), the laminated prepreg was heated at 366°C for 12 minutes under a pressure of 1 MPa with a press machine to prepare a fiber-reinforced resin molded article. A pressure of 1 MPa was applied to the obtained fiber-reinforced resin molded article, and the fiber-reinforced resin molded article was held at 250°C for 6 minutes to weld the superimposed surfaces, thereby obtaining an integrated product for evaluation of tensile shear joint strength.

Table 11 shows evaluation results of physical properties and the like of the hybrid prepreg, the fiber-reinforced resin molded article, and the integrated product.

### [Example 54]

Carbon fiber T800S was used as a reinforcing fiber, "AMILAN (registered trademark)" CM1007 was used as a thermoplastic resin, "jER (registered trademark)" 828 was used as a bifunctional or higher functional thermosetting resin monomer or prepolymer, SEIKACURE-S was used as a bifunctional or higher functional curing agent, and a composition shown in Table 11 was used as a thermosetting resin composition.

A reinforcing fiber sheet (areal weight: 190 g/m²) in which reinforcing fibers were aligned in one direction was drawn out, in the same manner as in Example 36, a bifunctional or higher functional thermosetting resin monomer or prepolymer and a bifunctional or higher functional curing agent were applied. At this time, the ratio of each component was set as shown in Table 11.

The surface of the film coated with the bifunctional or higher functional thermosetting resin monomer or prepolymer and the bifunctional or higher functional curing agent was disposed on one surface of the continuous fiber sheet, heated with an IR heater to melt the film, and adhered to the entire one surface of the continuous reinforcing fiber sheet, and pressurized with 3 pairs of nip rolls maintained at a temperature 100°C lower than the melting point or glass transition temperature of the thermoplastic resin to impregnate the reinforcing fiber sheet, thereby obtaining a semi-preg in which the fiber-reinforced sheet was exposed on the other surface. A film formed of an uncured thermosetting resin composition (areal weight: 50 g/m²) was superimposed on the other surface of the obtained semi-preg, and heat rolling was performed to impregnate the continuous reinforcing fiber sheet with the film formed of the uncured thermosetting resin composition while heating and pressurizing to obtain a hybrid prepreg.

2 sheets obtained by cutting the obtained hybrid prepreg into a predetermined size and 6 sheets obtained by cutting the thermosetting prepreg prepared as described above into a similar shape were prepared, and the prepreg was laminated such that the outermost layer was the 2 hybrid prepregs (the outermost surface was the layer containing the thermoplastic resin) and the inner layer was the thermosetting prepreg in a configuration of [0°/90°]_{2S} (symbol S indicates mirror symmetry), defining the axial direction of the reinforcing fiber as 0° and the axis orthogonal direction as 90°.

According to the above (2), except that a fiber-reinforced resin molded article was prepared by applying a pressure of 1 MPa to the laminated prepreg with a press machine and heating the prepreg at 230°C for 12 minutes, a pressure of 1 MPa was applied to the obtained fiber-reinforced resin molded article and the fiber-reinforced resin molded article was held at 250°C for 6 minutes, and accordingly, the superimposed surfaces were welded to obtain an integrated product for evaluation of tensile shear joint strength.

Table 11 shows evaluation results of physical properties and the like of the hybrid prepreg, the fiber-reinforced resin molded article, and the integrated product.

### [Example 55]

Except that "AMILAN (registered trademark)" CM1007 was used as a thermoplastic resin, benzoxazine resin F-a was used as a bifunctional or higher functional thermosetting resin monomer or prepolymer, "Araldite (registered trademark) MY0610 was used as a bifunctional or higher functional curing agent, and the proportions of the thermoplastic resin, the bifunctional or higher functional thermosetting resin monomer or prepolymer, and the bifunctional or higher functional curing agent were set to be % by mass shown in Table 11 with respect to 100% by mass of the total amount of the thermoplastic resin, the bifunctional or higher functional thermosetting resin monomer or prepolymer, and the bifunctional or higher functional curing agent, in the same manner as in Example 53, a hybrid prepreg, a fiber-reinforced resin molded article, and an integrated product were prepared.

Table 11 shows evaluation results of physical properties and the like of the hybrid prepreg, the fiber-reinforced resin molded article, and the integrated product.

### [Example 56]

Except that "AMILAN (registered trademark)" CM1007 was used as a thermoplastic resin, a benzoxazine resin F-a was used as a bifunctional or higher functional thermosetting resin monomer or prepolymer, "Araldite (registered trademark)" MY0610 was used as a bifunctional or higher functional curing agent, and the composition shown in Table 11 was used as a thermosetting resin composition, the laminated prepreg was applied with a pressure of 1 MPa by a press machine, heated at 180°C for 1 hour, and then heated at 230°C for 1 hour to prepare a fiber-reinforced resin molded article, in the same manner as in Example 54, a hybrid prepreg, a fiber-reinforced resin molded article, and an integrated product were prepared. At this time, the proportions of the thermoplastic resin, the bifunctional or higher functional thermosetting resin monomer or prepolymer, and the bifunctional of higher functional curing agent were set to be % by mass shown in Table 11 with respect to 100% by mass of the total amount of the thermoplastic resin, the bifunctional or higher functional thermosetting resin monomer or prepolymer, and the bifunctional or higher functional curing agent.

Table 11 shows evaluation results of physical properties and the like of the hybrid prepreg, the fiber-reinforced resin molded article, and the integrated product.

### [Example 57]

Except that "AMILAN (registered trademark)" CM1007 was used as a thermoplastic resin, "Compimide (registered trademark)" MDAB and "Compimide (registered trademark)" TDAB were used as a bifunctional or higher functional thermosetting resin monomer or prepolymer, "Compimide (registered trademark)" TM124 was used as a bifunctional or higher functional curing agent, and the proportions of the thermoplastic resin, the bifunctional or higher functional thermosetting resin monomer or prepolymer, and the bifunctional or higher functional curing agent were set to be % by mass shown in Table 11 with respect to 100% by mass of the total amount of the thermoplastic resin, the bifunctional or higher functional thermosetting resin monomer or prepolymer, and the bifunctional or higher functional curing agent, in the same manner as in Example 53, a hybrid prepreg, a fiber-reinforced resin molded article, and an integrated product were prepared.

Table 11 shows evaluation results of physical properties and the like of the hybrid prepreg, the fiber-reinforced resin molded article, and the integrated product.

### [Example 58]

Except that "AMILAN (registered trademark)" CM1007 was used as a thermoplastic resin, "Compimide (registered trademark)" MDAB and "Compimide (registered trademark)" TDAB were used as a bifunctional or higher functional thermosetting resin monomer or prepolymer, "Compimide (registered trademark)" TM124 was used as a bifunctional or higher functional curing agent, and the composition shown in Table 11 was used as a thermosetting resin composition, the laminated prepreg was applied with a pressure of 1 MPa by a press machine, heated at 180°C for 1 hour, and then heated at 230°C for 1 hour to prepare the fiber-reinforced resin molded article, in the same manner as in Example 54, a hybrid prepreg, a fiber-reinforced resin molded article, and an integrated product were prepared.

Table 11 shows evaluation results of physical properties and the like of the hybrid prepreg, the fiber-reinforced resin molded article, and the integrated product.

Comparison of Examples 36 to 38 with Comparative Example 6 and comparison of Examples 39 to 43 with Comparative Example 7 show that when the thermoplastic resin layer contains, in the form of a bifunctional or higher functional thermosetting resin monomer or prepolymer and a bifunctional or higher functional curing agent, more than 35.0% by mass in total of the constituting unit of the thermosetting resin and the constituting unit of the curing agent with respect to 100% by mass in total amount of the constituting unit of the thermoplastic resin, the constituting unit of the thermosetting resin, and the constituting unit of the curing agent, the dimensional stability at the time of welding is good or particularly good, but the tensile shear joint strength at 23°C fails.

Comparison of Examples 36 to 38 with Comparative Example 1 and comparison of Examples 39 to 43 with Comparative Example 8 show that when the thermoplastic resin layer contains, in the form of a bifunctional or higher functional thermosetting resin monomer or prepolymer and a bifunctional or higher functional curing agent, less than 0.5% by mass in total of the constituting units of the thermosetting resin monomer or prepolymer and the curing agent with respect to 100% by mass in total amount of the constituting unit of the thermoplastic resin, the constituting unit of the thermosetting resin, and the constituting unit of the curing agent, the tensile shear joint strength at 23°C is particularly good, but the dimensional stability at the time of welding fails.

Comparison of Examples 36 to 38 with Examples 39 to 43 shows that the prepreg containing a bifunctional or higher functional thermosetting resin monomer or prepolymer capable of forming a covalent bond by reaction and a bifunctional or higher functional curing agent is excellent in dimensional stability at the time of welding.

Comparison of Example 48 with Comparative Example 9, comparison of Example 49 with Comparative Example 10, and comparison of Example 50 with Comparative Example 11 show that when the thermoplastic resin layer contains, in the form of a bifunctional or higher functional thermosetting resin monomer or prepolymer and a bifunctional or higher functional curing agent, only less than 0.5% by mass in total of the thermosetting resin monomer or prepolymer and the curing agent with respect to 100% by mass in total amount of the constituting unit of the thermoplastic resin, the constituting unit of the thermosetting resin, and the constituting unit of the curing agent, the tensile shear joint strength at 23°C is good or particularly good, but the dimensional stability at the time of welding fails.

From the results of Examples 53 to 58, it can be seen that the thermoplastic resin layer contains a bifunctional or higher functional thermosetting resin monomer or prepolymer and a bifunctional or higher functional curing agent, and the hybrid prepreg containing 65.0 to 99.5% by mass of the constituting unit of the thermoplastic resin and containing 0.5 to 35.0% by mass in total of the constituting unit of the thermosetting resin and the constituting unit of the curing agent with respect to 100% by mass in total amount of the constituting unit of the thermoplastic resin, the constituting unit of the thermosetting resin, and the constituting unit of the curing agent, is excellent in balance between the dimensional stability at the time of welding and the tensile shear joint strength at 23°C.

**[Table 1]**

| [Table 1] | | | A-1 | A-2 | A-3 | A-4 | A-5 | A-6 | A-7 |
|---|---|---|---|---|---|---|---|---|---|
| Bifunctional or higher functional thermosetting resin monomer or prepolymer | | | | | | | | | |
| | jER(registered trademark) 828 | % by mass | 95.0 | 75.0 | 60.0 | 24.0 | 75.0 | - | - |
| | SUMI-EPOXY(registered trademark) ELM434 | | - | - | - | 44.0 | - | - | - |
| | F-a | | - | - | - | - | - | 60.0 | - |
| | Compimide(registered trademark) MDAB | | - | - | - | - | - | - | 40.0 |
| | Compimide(registered trademark) TDAB | | - | - | - | - | - | - | 27.0 |
| Bifunctional or higher functional curing agent | | | | | | | | | |
| | SEIKACURE-S | % by mass | 5.0 | 25.0 | 40.0 | 32.0 | 25.0 | - | - |
| | Araldite(registered trademark) MY0610 | | - | - | - | - | - | 40.0 | - |
| | Compimide (registered trademark) TM124 | | - | - | - | - | - | - | 33.0 |
| Mixing temperature | | °C | 180 | 180 | 180 | 180 | 180 | 180 | 180 |
| Mixing time | | min | 5 | 5 | 5 | 5 | 30 | 5 | 5 |

**[Table 2-1]**

| [Table 2] | | | | Example 1 | Example 2 | Example 3 | Example 4 |
|---|---|---|---|---|---|---|---|
| Reinforcing fiber | | | Variety | T800S | T800S | T800S | T800S |
| Thermoplastic resin | | | | | | | |
| | | Amirane (registered trademark) CM1007 (melting point: 225°C) | % by mass | 90.0 | 90.0 | 90.0 | 90.0 |
| Reaction product [A] of bifunctional or higher functional thermosetting resin monomer or prepolymer and bifunctional or higher functional curing agent | | | - | A-1 | A-1 | A-2 | A-3 |
| | | | % by mass | 10.0 | 10.0 | 10.0 | 10.0 |
| | Bifunctional or higher functional thermosetting resin monomer or prepolymer | | | | | | |
| | | jER (registered trademark) 828 | % by mass | - | - | - | - |
| | | SUMI-EPOXY (registered trademark) ELM434 | | - | - | - | - |
| | Bifunctional or higher functional curing agent | | | | | | |
| | | SEIKACURE-S | % by mass | - | - | - | - |
| Mixing temperature | | | °C | 260 | 260 | 260 | 260 |
| Mixing time | | | min | 5 | 30 | 5 | 5 |
| Presence or absence of reaction product [A] | | | - | Present | Present | Present | Present |
| Miscibility between thermoplastic resin and reaction product [A] | | | - | Miscible | Miscible | Miscible | Miscible |
| Structure of mixture of thermoplastic resin and reaction product [A] | | | - | Semi-IPN | IPN | Semi-IPN | Semi-IPN |
| Welding temperature | | | °C | 250 | 250 | 250 | 250 |
| Dimensional stability at the time of welding | | | Determination | C | B | B | C |
| | | | % | 8.8 | 7.4 | 7.1 | 8.1 |
| Tensile shear joint strength at 23°C | | | Determination | A | A | A | A |
| | | | MPa | 30.5 | 29.6 | 28.8 | 30.2 |

**[Table 2-2]**

| [Table 2] | | | | Example 5 | Example 6 | Comparative Example 1 |
|---|---|---|---|---|---|---|
| Reinforcing fiber | | | Variety | T800S | T800S | T800S |
| Thermoplastic resin | | | | | | |
| | | Amirane (registered trademark) CM1007 (melting point: 225°C) | % by mass | 90.0 | 90.0 | 100.0 |
| Reaction product [A] of bifunctional or higher functional thermosetting resin monomer or prepolymer and bifunctional or higher functional curing agent | | | - | A-4 | A-5 | - |
| | | | % by mass | 10.0 | 10.0 | - |
| | Bifunctional or higher functional thermosetting resin monomer or prepolymer | | | | | |
| | | jER (registered trademark) 828 | % by mass | - | - | - |
| | | SUMI-EPOXY (registered trademark) ELM434 | | - | - | - |
| | Bifunctional or higher functional curing agent | | | | | |
| | | SEIKACURE-S | % by mass | - | - | - |
| Mixing temperature | | | °C | 260 | 260 | - |
| Mixing time | | | min | 5 | 5 | - |
| Presence or absence of reaction product [A] | | | - | Present | Present | Absent |
| Miscibility between thermoplastic resin and reaction product [A] | | | - | Miscible | Phase separation | - |
| Structure of mixture of thermoplastic resin and reaction product [A] | | | - | Semi-IPN | Sea-island | - |
| Welding temperature | | | °C | 250 | 250 | 250 |
| Dimensional stability at the time of welding | | | Determination | B | C | D |
| | | | % | 6.7 | 9.9 | 14.8 |
| Tensile shear joint strength at 23°C | | | Determination | A | A | A |
| | | | MPa | 28.0 | 28.3 | 28.7 |

**[Table 3-1]**

| [Table 3] | | | | Example 7 | Example 8 | Example 9 | Example 10 | Example 11 | Example 12 |
|---|---|---|---|---|---|---|---|---|---|
| Reinforcing fiber | | | Variety | T800S | T800S | T800S | T800S | T800S | T800S |
| Thermoplastic resin | | | | | | | | | |
| | | Amirane (registered trademark) CM1007 (melting point: 225°C) | % by mass | 90.0 | 90.0 | 65.0 | 99.0 | 90.0 | 90.0 |
| Reaction product [A] of bifunctional or higher functional thermosetting resin monomer or prepolymer and bifunctional or higher functional curing agent | | | - | - | - | A-2 | A-2 | A-6 | A-7 |
| | | | % by mass | - | - | 35.0 | 1.0 | 10.0 | 10.0 |
| | Bifunctional or higher functional thermosetting resin monomer or prepolymer | | | | | | | | |
| | | jER(registered trademark) 828 | % by mass | 7.5 | 2 .4 | - | - | - | - |
| | | SUMI-EPOXY(registered trademark) ELM434 | | - | 4.4 | - | - | - | - |
| | Bifunctional or higher functional curing agent | | | | | | | | |
| | | SEIKACURE-S | % by mass | 2.5 | 3.2 | - | - | - | - |
| Mixing temperature | | | °C | 260 | 260 | 260 | 260 | 260 | 260 |
| Mixing time | | | min | 5 | 5 | 5 | 5 | 5 | 5 |
| Presence or absence of reaction product [A] | | | - | Present | Present | Present | Present | Present | Present |
| Miscibility between thermoplastic resin and reaction product [A] | | | - | Miscible | Miscible | Miscible | Miscible | Miscible | Miscible |
| Structure of mixture of thermoplastic resin and reaction product [A] | | | - | Semi-IPN | Semi-IPN | Semi-IPN | Semi-IPN | Semi-IPN | Semi-IPN |
| Welding temperature | | | °C | 250 | 250 | 250 | 250 | 250 | 250 |
| Dimensional stability at the time of welding | | | Determination | A | A | A | B | B | B |
| | | | | 4.5 | 2.8 | 1.6 | 7.5 | 7.0 | 6.9 |
| Tensile shear joint strength at 23°C | | | Determination | B | B | C | A | A | A |
| | | | MPa | 27.4 | 25.3 | 20.3 | 39.0 | 29.0 | 28.5 |

**[Table 3-2]**

| [Table 3] | | | | Comparative Example 2 | Comparative Example 3 |
|---|---|---|---|---|---|
| Reinforcing fiber | | | Variety | T800S | T800S |
| Thermoplastic resin | | | | | |
| | | Amirane (registered trademark) CM1007 (melting point: 225°C) | % by mass | 60.0 | 99.9 |
| Reaction product [A] of bifunctional or higher functional thermosetting resin monomer or prepolymer and bifunctional or higher functional curing agent | | | - | A-2 | A-2 |
| | | | % by mass | 40. 0 | 0.1 |
| | Bifunctional or higher functional thermosetting resin monomer or prepolymer | | | | |
| | | jER(registered trademark) 828 | % by mass | - | - |
| | | SUMI-EPOXY (registered trademark) ELM434 | | - | - |
| | Bifunctional or higher functional curing agent | | | | |
| | | SEIKACURE-S | % by mass | - | - |
| Mixing temperature | | | °C | 260 | 260 |
| Mixing time | | | min | 5 | 5 |
| Presence or absence of reaction product [A] | | | - | Present | Present |
| Miscibility between thermoplastic resin and reaction product [A] | | | - | Phase separation | Miscible |
| Structure of mixture of thermoplastic resin and reaction product [A] | | | - | Sea-island | Semi-IPN |
| Welding temperature | | | °C | 250 | 250 |
| Dimensional stability at the time of welding | | | Determination | A | D |
| | | | % | 1.4 | 13.0 |
| Tensile shear joint strength at 23°C | | | Determination | D | A |
| | | | MPa | 18.9 | 29.0 |

**[Table 4]**

| [Table 4] | | | Example 13 | Example 14 | Example 15 | Example 16 | Example 17 | Example 18 |
|---|---|---|---|---|---|---|---|---|
| Reinforcing fiber | | Variety | T800S | T800S | T800S | T800S | T800S | T800S |
| Thermoplastic resin | | | | | | | | |
| | Amirane (registered trademark) CM1007 (melting point: 225°C) | % by mass | 90.0 | 90.0 | 90.0 | 90.0 | 90.0 | 90.0 |
| Reaction product [A] of bifunctional or higher functional thermosetting resin monomer or prepolymer and bifunctional or higher functional curing agent | | - | A-4 | A-4 | A-6 | A-6 | A-7 | A-7 |
| | | % by mass | 10.0 | 10.0 | 10.0 | 10.0 | 10.0 | 10.0 |
| Thermoplastic resin used for second thermoplastic resin layer | | | | | | | | |
| | KEPSTAN (registered trademark) 7002 (melting point: 331°C) | - | ○ | - | ○ | - | ○ | - |
| Thermosetting resin composition (proportion with respect to 100% by mass of total amount of thermosetting resin composition) | | | | | | | | |
| | jER (registered trademark) 828 | % by mass | - | 22 | - | - | - | - |
| | SUMI-EPOXY (registered trademark) ELM434 | | - | 41 | - | - | - | - |
| | SEIKACURE-S | | - | 28 | - | - | - | - |
| | SUMIKAEXCEL (registered trademark) PES5003P | | - | 9 | - | - | - | - |
| | F-a | | - | - | - | 57 | - | - |
| | Araldite (registered trademark) MY0610 | | - | - | - | 38 | - | - |
| | Virantage (registered trademark) VW10700RFP | | - | - | - | 5 | - | - |
| | Compimide (registered trademark) MDAB | | - | - | - | - | - | 39 |
| | Compimide(registered trademark) TDAB | | - | - | - | - | - | 26 |
| | Compimide (registered trademark) TM124 | | - | - | - | - | - | 32 |
| | Matrimid (registered trademark) 9725 | | - | - | - | - | - | 2 |
| Presence or absence of reaction product [A] | | - | Present | Present | Present | Present | Present | Present |
| Miscibility between thermoplastic resin and reaction product [A] | | - | Miscible | Miscible | Miscible | Miscible | Miscible | Miscible |
| Structure of mixture of thermoplastic resin and reaction product [A] | | - | Semi-IPN | Semi-IPN | Semi-IPN | Semi-IPN | Semi-IPN | Semi-IPN |
| Mean width of roughness profile elements RSm (pm) of prepreg | | µm | 53 | 47 | 50 | 43 | 54 | 50 |
| Mean height of roughness profile elements Rc (µm) of prepreg | | µm | 18 | 24 | 16 | 22 | 20 | 26 |
| Welding temperature | | °C | 250 | 250 | 250 | 250 | 250 | 250 |
| Dimensional stability at the time of welding | | Determination | A | A | A | A | A | A |
| | | % | 2.5 | 0.5 | 2.9 | 0.6 | 2.8 | 0.6 |
| Tensile shear joint strength at 23°C | | Determination | A | A | A | A | A | A |
| | | MPa | 28.9 | 28.2 | 30.2 | 29.9 | 29.7 | 29.3 |

**[Table 5-1]**

| [Table 5] | | | B-1 | B-2 | B-3 | B-4 | B-5 | B-6 |
|---|---|---|---|---|---|---|---|---|
| Bifunctional or higher functional thermosetting resin monomer or prepolymer | | | | | | | | |
| | jER (registered trademark) 828 | % by mass | 10.0 | - | - | - | 7.5 | 2.4 |
| | SUMI-EPOXY (registered trademark) ELM434 | | - | - | 10.0 | - | - | 4.4 |
| | F-a | | - | - | - | - | - | - |
| | Compimide (registered trademark) MDAB | | - | - | - | - | - | - |
| | Compimide (registered trademark) TDAB | | - | - | - | - | - | - |
| Bifunctional or higher functional curing agent | | | | | | | | |
| | SEIKACURE-S | % by mass | - | 10.0 | - | - | 2.5 | 3.2 |
| | Tris (3-aminophenyl)phosphine oxide | | - | - | - | 10.0 | - | - |
| | Araldite (registered trademark) MY0610 | | - | - | - | - | - | - |
| | Compimide (registered trademark) TM124 | | - | - | - | - | - | - |
| Thermoplastic resin | | | | | | | | |
| | Amirane (registered trademark) CM1007 (melting point: 225°C) | % by mass | 90.0 | 90.0 | 90.0 | 90.0 | 90.0 | 90.0 |
| Mixing temperature | | °C | 260 | 260 | 260 | 260 | 260 | 260 |
| Mixing time | | min | 30 | 30 | 30 | 30 | 30+30 | 30+30 |
| Solubility in hexafluoroisopropanol | | - | Soluble | Soluble | Insoluble | Insoluble | Insoluble | Insoluble |
| Crosslinked structure | | - | Absent | Absent | Present | Present | Present | Present |

**[Table 5-2]**

| [Table 5] | | | B-7 | B-8 | B-9 | B-10 | B-11 | B-12 |
|---|---|---|---|---|---|---|---|---|
| Bifunctional or higher functional thermosetting resin monomer or prepolymer | | | | | | | | |
| | jER (registered trademark) 828 | % by mass | 26.3 | 0.7 | 30.0 | 0.07 | - | - |
| | SUMI-EPOXY (registered trademark) ELM434 | | - | - | - | - | - | - |
| | F-a | | - | - | - | - | 6.0 | - |
| | Compimide (registered trademark) MDAB | | - | - | - | - | - | 4.0 |
| | Compimide (registered trademark) TDAB | | - | - | - | - | - | 2.7 |
| Bifunctional or higher functional curing agent | | | | | | | | |
| | SEIKACURE-S | % by mass | 8.8 | 0.3 | 10.0 | 0.03 | - | - |
| | Tris (3-aminophenyl)phosphine oxide | | - | - | - | - | - | - |
| | Araldite (registered trademark) MY0610 | | - | - | - | - | 4.0 | - |
| | Compimide (registered trademark) TM124 | | - | - | - | - | - | 3.3 |
| Thermoplastic resin | | | | | | | | |
| | Amirane (registered trademark) CM1007 (melting point: 225°C) | % by mass | 65.0 | 99.0 | 60.0 | 99.9 | 90.0 | 90.0 |
| Mixing temperature | | °C | 260 | 260 | 260 | 260 | 260 | 260 |
| Mixing time | | min | 30+30 | 30+30 | 30+30 | 30+30 | 30 | 30+30 |
| Solubility in hexafluoroisopropanol | | - | Insoluble | Insoluble | Insoluble | Insoluble | Insoluble | Insoluble |
| Crosslinked structure | | - | Present | Present | Present | Present | Present | Present |

**[Table 6-1]**

| [Table 6] | | | Example 19 | Example 20 | Example 21 | Example 22 | Example 23 |
|---|---|---|---|---|---|---|---|
| Reinforcing fiber | | Variety | T800S | T800S | T800S | T800S | T800S |
| Reaction product [B] of bifunctional or higher functional thermosetting resin monomer or prepolymer and/or bifunctional or higher functional curing agent and thermoplastic resin | | | B-1 | B-2 | B-3 | B-4 | B-5 |
| | | % by mass | 100.0 | 100.0 | 100.0 | 100.0 | 100.0 |
| Bifunctional or higher functional thermosetting resin monomer or prepolymer | | | | | | | |
| | jER (registered trademark) 828 | % by mass | - | - | - | - | - |
| | SUMI-EPOXY (registered trademark) ELM434 | | - | - | - | - | - |
| Bifunctional or higher functional curing agent | | | | | | | |
| | SEIKACURE-S | % by mass | - | - | - | - | - |
| Thermoplastic resin | | | | | | | |
| | Amirane (registered trademark) CM1007 (melting point: 225°C) | % by mass | - | - | - | - | - |
| Presence or absence of reaction product [A] | | - | Absent | Absent | Absent | Absent | Absent |
| Miscibility of [A] and [B] | | - | | | | | |
| Welding temperature | | °C | 250 | 250 | 250 | 250 | 250 |
| Dimensional stability at the time of welding | | Determination | B | C | A | B | A |
| | | | 7.4 | 8.8 | 4.8 | 5.7 | 4.1 |
| Tensile shear joint strength at 23°C | | Determination | A | A | B | A | B |
| | | MPa | 30.8 | 30.0 | 25.6 | 28.5 | 27.4 |

**[Table 6-2]**

| [Table 6] | | | Example 24 | Example 25 | Comparative Example 1 |
|---|---|---|---|---|---|
| Reinforcing fiber | | Variety | T800S | T800S | T800S |
| Reaction product [B] of bifunctional or higher functional thermosetting resin monomer or prepolymer and/or bifunctional or higher functional curing agent and thermoplastic resin | | - | B-6 | B-1 | - |
| | | % by mass | 100.0 | 95.0 | - |
| Bifunctional or higher functional thermosetting resin monomer or prepolymer | | | | | |
| | jER (registered trademark) 828 | % by mass | - | 3.0 | - |
| | SUMI-EPOXY (registered trademark) ELM434 | | - | - | - |
| Bifunctional or higher functional curing agent | | | | | |
| | SEIKACURE-S | % by mass | - | 2.0 | - |
| Thermoplastic resin | | | | | |
| | Amirane (registered trademark) CM1007 (melting point: 225°C) | % by mass | - | - | 100.0 |
| Presence or absence of reaction product [A] | | - | Absent | Present | Absent |
| Miscibility of [A] and [B] | | - | - | Miscible | - |
| Welding temperature | | °C | 250 | 250 | 250 |
| Dimensional stability at the time of welding | | Determination | A | A | D |
| | | % | 3.0 | 3.2 | 14.8 |
| Tensile shear joint strength at 23°C | | Determination | C | B | A |
| | | MPa | 24.8 | 25.1 | 28.7 |

**[Table 7]**

| [Table 7] | | | Example 26 | Example 27 | Example 28 | Example 29 | Comparative Example 4 | Comparative Example 5 |
|---|---|---|---|---|---|---|---|---|
| Reinforcing fiber | | Variety | T800S | T800S | T800S | T800S | T800S | T800S |
| Reaction product [3] of bifunctional or higher functional thermosetting resin monomer or prepolymer and/or bifunctional or higher functional curing agent and thermoplastic resin | | - | B-7 | B-8 | B-11 | B-12 | B-9 | B-10 |
| | | % by mass | 100.0 | 100.0 | 100.0 | 100.0 | 100.0 | 100.0 |

| Bifunctional or higher functional thermosetting monomer or prepolymer resin | | | | | | | | |
|---|---|---|---|---|---|---|---|---|
| | jER (registered trademark) 828 | % by mass | - | - | - | - | - | - |
| | SUMI-EPOXY (registered trademark) ELM434 | | | | | | | |

| Bifunctional or higher functional curing agent | | | | | | | | |
|---|---|---|---|---|---|---|---|---|
| | SEIKACURE-S | % by mass | - | - | - | - | - | - |

| Thermoplastic resin | | | | | | | | |
|---|---|---|---|---|---|---|---|---|
| | Amirane (registered trademark) CM1007 (melting point: 225°C) | % by mass | - | - | - | - | - | - |
| Presence or absence of reaction product [A] | | - | Absent | Absent | Absent | Absent | Absent | Absent |
| Miscibility of [A] and [B] | | - | - | - | - | - | - | - |
| Welding temperature | | °C | 250 | 250 | 250 | 250 | 250 | 250 |
| Dimensional stability at the time of welding | | Determination | A | B | B | B | A | D |
| | | % | 1.4 | 7.0 | 6.5 | 6.2 | 1.1 | 12.8 |
| Tensile shear joint strength at 23°C | | Determination | C | A | A | A | D | A |
| | | MPa | 20.4 | 33.7 | 28.3 | 28.0 | 17.0 | 28.4 |

**[Table 8]**

| [Table 8] | | | Example 30 | Example 31 | Example 32 | Example 33 | Example 34 | Example 35 |
|---|---|---|---|---|---|---|---|---|
| Reinforcing fiber | | Variety | T800S | T800S | T800S | T800S | T800S | T800S |
| Reaction product [B] of bifunctional or higher functional thermosetting resin monomer or prepolymer and/or bifunctional or higher functional curing agent and thermoplastic resin | | - | B-5 | B-5 | B-11 | B-11 | B-12 | B-12 |
| | | % by mass | 100.0 | 100.0 | 100.0 | 100.0 | 100.0 | 100.0 |

| Thermoplastic resin used for second thermoplastic resin layer | | | | | | | | |
|---|---|---|---|---|---|---|---|---|
| | KEPSTAN (registered trademark) 7002 (melting point: 331°C) | - | ○ | - | ○ | - | ○ | - |

| Thermosetting resin composition (proportion with respect to 100% by mass of total amount of thermosetting resin composition) | | | | | | | | |
|---|---|---|---|---|---|---|---|---|
| | jER (registered trademark) 828 | % by mass | - | 22 | - | | - | |
| | SUMI-EPOXY (registered trademark) ELM434 | | | 41 | - | | | |
| | SEIKACURE-S | | - | 28 | - | | - | |
| | SUMIKAEXCEL (registered trademark) PES5003P | | - | 9 | - | | - | |
| | F-a | | - | - | - | 57 | - | |
| | Araldite (registered trademark) MY0610 | | - | - | - | 38 | - | |
| | Virantage (registered trademark) VW10700RFP | | - | - | - | 5 | - | |
| | Compimide (registered trademark) MDAB | | - | - | - | | - | 39 |
| | Compimide (registered trademark) TDAB | | - | - | - | | - | 26 |
| | Compimide (registered trademark) TM124 | | | | - | | - | 32 |
| | Matrimid (registered trademark) 9725 | | - | - | - | | - | 2 |
| Presence or absence of reaction product [A] | | - | Absent | Absent | Absent | Absent | Absent | Absent |
| Miscibility of [A] and [B] | | - | - | - | - | - | - | - |
| Mean width of roughness profile elements RSm (pm) of prepreg | | 4m | 48 | 42 | 45 | 44 | 50 | 46 |
| Mean height of roughness profile elements Rc (µm) of prepreg | | 4m | 12 | 18 | 12 | 11 | 15 | 12 |
| Welding temperature | | °C | 250 | 250 | 250 | 250 | 250 | 250 |
| Dimensional stability at the time of welding | | Determination | A | A | A | A | A | A |
| | | % | 1.9 | 0.2 | 1.9 | 0.2 | 1.7 | 0.2 |
| Tensile shear joint strength at 23°C | | Determination | A | A | A | A | A | A |
| | | MPa | 28.4 | 28.0 | 29.0 | 28.9 | 28.8 | 28.5 |

**[Table 9-1]**

| [Table 9] | | | Example 36 | Example 37 | Example 38 | Comparative Example 6 | Comparative Example 1 |
|---|---|---|---|---|---|---|---|
| Reinforcing fiber | | Variety | T800S | T800S | T800S | T800S | T800S |

| Thermoplastic resin | | | | | | | |
|---|---|---|---|---|---|---|---|
| | Amirane (registered trademark) CM4000 (melting point: 155°C) | % by mass | | | | | |
| | Amirane (registered trademark) CM1007 (melting point: 225°C) | | 90.0 | 90.0 | 90.0 | 60.0 | 100.0 |
| | SUMIKAEXCEL (registered trademark) PESS003P (glass transition temperature: 225°C) | | | | | | |
| | TORELINA (registered trademark) A670T05 (melting point: 278°C) | | | | | | |
| | KEPSTAN (registered trademark) 7002 (melting point: 331°C) | | | | | | |

| BIFUNCTIONAL OR HIGHER FUNCTIONAL THERMOSETTING RESIN MONOMER OR PREPOLYMER ... (1) | | | | | | | |
|---|---|---|---|---|---|---|---|
| | jER (registered trademark) 828 | % by mass | 10.0 | 10.0 | 10.0 | 40.0 | - |
| | SUMI-EPOXY (registered trademark) ELM434 | | | | | | |

| BIFUNCTIONAL OR HIGHER FUNCTIONAL CURING AGENT ... (2) | | | | | | | |
|---|---|---|---|---|---|---|---|
| | SEIKACURE-S | % by mass | - | - | - | - | - |
| | DICY | | - | - | - | - | - |

| Other components (proportion with respect to 100% by mass of total amount of thermoplastic resin, (1), and (2)) | | | | | | | |
|---|---|---|---|---|---|---|---|
| | EPTS | % by mass | | 0.1 | | | |
| Proportion of (1) with respect to 1002 by mass of total amount of (1) and (2) | | % by mass | | | | | |
| Proportion of (2) with respect to 1002 by mass of total amount of (1) and (2) | | | | | | | |
| Reactivity of (1) and (2) | | | | | | | |
| Miscibility of thermoplastic resin with (1) and (2) | | | Miscible | Miscible | Miscible | Phase separation | |
| Presence or absence of reaction product [B] | | | Absent | Absent | Present | Absent | |
| Welding temperature | | °C | 250 | 250 | 250 | 250 | 250 |
| Dimensional stability at the time of welding | | Determination | C | B | E | B | D |
| | | | 9.2 | 5.8 | 7.4 | 6.2 | 14.8 |
| Tensile shear joint strength at 23°C | | Determination | A | A | A | D | A |
| | | MPa | 30.5 | 31.0 | 30.8 | 19.5 | 28.7 |

**[Table 9-2]**

| [Table 9] | | | Example 39 | Example 40 | Example 41 | Example 42 | Example 43 | Comparative Example 7 | Comparative Example 8 |
|---|---|---|---|---|---|---|---|---|---|
| Reinforcing fiber | | Variety | T800S | T800S | T800S | T800S | T800S | T800S | T800S |
| Thermoplastic resin | | | | | | | | | |
| | Amirane (registered trademark) CM4000 (melting point: 155°C) | | | | | | | | |
| | Amirane (registered trademark) CM1007 (melting point: 225°C) | | 65.0 | 80.0 | 95.0 | 94.5 | 99.0 | 60.0 | 99.9 |
| | SUMIKAEXCEL (registered trademark) PESS003P (glass transition temperature: 225°C) | % by mass | | | | 0.5 | | | |
| | TORELINA (registered trademark) A670T05 (melting point: 278°C) | | | | | | | | |
| | KEPSTAN (registered trademark) 7002 (melting point: 331°C) | | | | | | | | |

| BIFUNCTIONAL OR HIGHER FUNCTIONAL THERMOSETTING RESIN MONOMER OR PREPOLYMER ... (1) | | | | | | | | | |
|---|---|---|---|---|---|---|---|---|---|
| | jER (registered trademark) 828 | | 25.9 | 14.8 | 3.7 | 3.7 | 0.7 | 29.6 | 0.07 |
| | SCMI-EPOXY (registered trademark) ELM434 | % by mass | | | | | | | |

| BIFUNCTIONAL OR HIGHER FUNCTIONAL CORING AGENT ... (2) | | | | | | | | | |
|---|---|---|---|---|---|---|---|---|---|
| | SEIKACURE-S | % by mass | 9.1 | 5.2 | 1.3 | 1.3 | 0.3 | 10.4 | 0.03 |
| | DICY | | | | | | | - | - |

| Other components (proportion with respect to 100% by mass of total amount of thermoplastic resin, (1), and (2)) | | | | | | | | | |
|---|---|---|---|---|---|---|---|---|---|
| | EPTS | % by mass | | | | | | | |
| Proportion of (1) with respect to 100% by mass of total amount of (1) and (2) | | % by mass | 74 | 74 | 74 | 74 | 74 | 74 | 74 |
| Proportion of (2) with respect to 100% by mass of total amount of (1) and (2) | | | 26 | 26 | 26 | 26 | 26 | 26 | 26 |
| Reactivity of (1) and (2) | | | Present | Present | Present | Present | Present | Present | Present |
| Miscibility of thermoplastic resin with (1) and (2) | | | Miscible | Miscible | Miscible | Miscible | Miscible | Phase separation | Miscible |
| Presence or absence of reaction product [B] | | | Absent | Absent | Absent | Absent | Absent | Absent | Absent |
| Welding temperature | | °C | 250 | 250 | 250 | 250 | 250 | 250 | 250 |
| Dimensional stability at the time of welding | | Determination | A | A | A | A | E | A | D |
| | | | 1.5 | 3.0 | 5.0 | 4.8 | 7.7 | 1.1 | 13.5 |
| Tensile shear joint strength at 23°C | | Determination | C | E | A | A | A | D | A |
| | | MPa | 20.1 | 25.2 | 31.2 | 32.0 | 35.3 | 18.9 | 29.4 |

**[Table 10-1]**

| [Table 10] | | | Example 44 | Example 45 | Example 46 | Example 47 | Example 48 | Comparative Example 9 | Example 49 |
|---|---|---|---|---|---|---|---|---|---|
| Reinforcing fiber | | Variety | T800S | T800S | T800S | T800S | T800S | T800S | T800S |

| Thermoplastic resin | | | | | | | | | |
|---|---|---|---|---|---|---|---|---|---|
| | Amirane (registered trademark) CM4000 (melting point: 155°C) | % by mass | | | | | 95.0 | 100.0 | |
| | Amirane (registered trademark) CM1007 (melting point: 225°C) | | 94.5 | 95.0 | 90.0 | 90.0 | | | |
| | SUMIKAEXCEL (registered trademark) PES5003P (glass transition temperature: 225°C) | | 0.5 | | | | | | |
| | TORELINA (registered trademark) A670T05 (melting point: 278°C) | | | | | | | | 95.0 |
| | KEPSTAN (registered trademark) 7002 (melting point: 331°C) | | | | | | | | |

| BIFUNCTIONAL OR HIGHER FUNCTIONAL THERMOSETTING RESIN MONOMER OR PREPOLYMER ... (1) | | | | | | | | | |
|---|---|---|---|---|---|---|---|---|---|
| | jER (registered trademark) 828 | % by mass | 1.2 | 4.9 | - | - | 3.7 | - | 3.7 |
| | SUMI-EPOXY (registered trademark) ELM434 | | 2.2 | | | - | | | - |
| | F-a | | - | - | 6.0 | - | - | - | - |
| | Compimide (registered trademark) MDAB | | - | - | - | 4.0 | - | - | - |
| | Compimide (registered trademark) TDAB | | - | - | - | 2.7 | - | - | - |

| BIFUNCTIONAL OR HIGHER FUNCTIONAL CURING AGENT ... (2) | | | | | | | | | |
|---|---|---|---|---|---|---|---|---|---|
| | SEIKACURE-S | % by mass | 1.6 | | | | 1.3 | - | 1.3 |
| | DICY | | | 0.1 | | | | - | |
| | Araldite (registered trademark) MY0610 | | | | 4.0 | | | - | |
| | Compimide (registered trademark) TM124 | | | | | 3.3 | | - | |

| Other components (proportion with respect to 100% by mass of total amount of thermoplastic resin, (1), and (2)) | | | | | | | | | |
|---|---|---|---|---|---|---|---|---|---|
| | EPTS | % by mass | | | | | | | |
| Proportion of (1) with respect to 100% by mass of total amount of (1) and (2) | | % by mass | 69 | 97 | 60 | 67 | 74 | | 74 |
| Proportion of (2) with respect to 100% by mass of total amount of (1) and (2) | | | 31 | 3 | 40 | 33 | 26 | | 26 |
| Reactivity of (1) and (2) | | | Present | Present | Present | Present | Present | | Present |
| Miscibility of thermoplastic resin with (1) and (2) | | | Miscible | Miscible | Miscible | Miscible | Miscible | | Miscible |
| Presence or absence of reaction product [B] | | | Absent | Absent | Absent | Absent | Absent | | Absent |
| Welding temperature | | °C | 250 | 250 | 250 | 250 | 180 | 180 | 303 |
| Dimensional stability at the time of welding | | Determination | A | B | B | B | A | D | B |
| | | % | 4.1 | 7.5 | 7.8 | 7.5 | 4.8 | 16.2 | 7.8 |
| Tensile shear joint strength at 23°C | | Determination | A | A | A | A | A | A | B |
| | | MPa | 32.3 | 32.7 | 33.0 | 32.5 | 33.7 | 34.8 | 27.5 |

**[Table 10-2]**

| [Table 10] | | | Comparative Example 10 | Example 50 | Comparative Example 11 | Example 51 | Example 52 |
|---|---|---|---|---|---|---|---|
| Reinforcing fiber | | Variety | T800S | T800S | T800S | Glass fiber | T700S |

| Thermoplastic resin | | | | | | | |
|---|---|---|---|---|---|---|---|
| | Amirane (registered trademark) CM4000 (melting point: 155°C) | % by mass | | | | | |
| | Amirane (registered trademark) CM1007 (melting point: 225°C) | | | | | 95.0 | 95.0 |
| | SUMIKAEXCEL (registered trademark) PES5003P (glass transition temperature: 225°C) | | | | | | |
| | TORELINA (registered trademark) A670T05 (melting point: 278°C) | | 100.0 | | | | |
| | KEPSTAN (registered trademark) 7002 (melting point: 331°C) | | | 95.0 | 100.0 | | |

| BIFUNCTIONAL OR HIGHER FUNCTIONAL THERMOSETTING RESIN MONOMER OR PREPOLYMER ... (1) | | | | | | | |
|---|---|---|---|---|---|---|---|
| | jER (registered trademark) 828 | % by mass | - | 3.7 | - | 3.7 | 3.7 |
| | SUMI-EPOXY (registered trademark) ELM434 | | | | | | |
| | F-a | | - | - | - | - | - |
| | Compimide (registered trademark) MDAB | | | | | | |
| | Compimide (registered trademark) TDAB | | | | | | |

| BIFUNCTIONAL OR HIGHER FUNCTIONAL CURING AGENT ... (2) | | | | | | | |
|---|---|---|---|---|---|---|---|
| | SEIKACURE-S | % by mass | - | 1.3 | - | 1.3 | 1.3 |
| | DICY | | - | - | - | - | - |
| | Araldite (registered trademark) MY0610 | | - | - | - | - | - |
| | Compimide (registered trademark) TM124 | | | | | | |

| Other components (proportion with respect to 100% by mass of total amount of thermoplastic resin, (1), and (2)) | | | | | | | |
|---|---|---|---|---|---|---|---|
| | EPTS | % by mass | | | | | |
| Proportion of (1) with respect to 100% by mass of total amount of (1) and (2) | | % by mass | | 74 | | 74 | 74 |
| Proportion of (2) with respect to 100% by mass of total amount of (1) and (2) | | | | 26 | | 26 | 26 |
| Reactivity of (1) and (2) | | | | Present | | Present | Present |
| Miscibility of thermoplastic resin with (1) and (2) | | | | Miscible | | Miscible | Miscible |
| Presence or absence of reaction product [B] | | | | Absent | | Absent | Absent |
| Welding temperature | | °C | 303 | 356 | 356 | 250 | 250 |
| Dimensional stability at the time of welding | | Determination | D | B | D | B | A |
| | | | 13.9 | 7.2 | 11.1 | 5.5 | 4.6 |
| Tensile shear joint strength at 23°C | | Determination | B | A | A | A | A |
| | | MPa | 27.9 | 30.2 | 30.6 | 30.5 | 28.3 |

**[Table 11]**

| | | | | | | | | |
|---|---|---|---|---|---|---|---|---|
| [Table 11] | | | Example 53 | Example 54 | Example 55 | Example 56 | Example 57 | Example 58 |
| Reinforcing fiber | | Variety | T800S | T800S | T800S | T800S | T800S | T800S |

| Thermoplastic resin | | | | | | | | |
|---|---|---|---|---|---|---|---|---|
| | Amirane (registered trademark) CM1007 (melting point: 225°C) | % by mass | 95.0 | 95.0 | 90.0 | 90.0 | 90.0 | 90.0 |

| BIFUNCTIONAL OR HIGHER FUNCTIONAL THERMOSETTING RESIN MONOMER OR PREPOLYMER ... (1) | | | | | | | | |
|---|---|---|---|---|---|---|---|---|
| | jER (registered trademark) 828 | % by mass | 3.7 | 1.2 | - | - | | |
| | SUMI-EPOXY (registered trademark) ELM434 | | - | 2.2 | - | - | | |
| | F-a | | - | - | 6.0 | 6.0 | | |
| | Compimide (registered trademark) MDAB | | - | - | - | - | 4.0 | 4.0 |
| | Compimide (registered trademark) TDAB | | | | | | 2.7 | 2.7 |

| BIFUNCTIONAL OR HIGHER FUNCTIONAL CURING AGENT ... (2) | | | | | | | | |
|---|---|---|---|---|---|---|---|---|
| | SEIKACURE-S | % by mass | 1.3 | 1.6 | | | | |
| | SUMI-EPOXY (registered trademark) ELM434 | | | | | | | |
| | Araldite (registered trademark) MY0610 | | | | 4.0 | 4.0 | | |
| | Compimide (registered trademark) TM124 | | | | | | 3.3 | 3.3 |

| Thermoplastic resin used for second thermoplastic resin layer | | | | | | | | |
|---|---|---|---|---|---|---|---|---|
| | KEPSTAN (registered trademark) 7002 (melting point: 331°C) | - | ○ | - | ○ | - | ○ | - |

| Thermosetting resin composition (proportion with respect to 100% by mass of total amount of thermosetting resin composition) | | | | | | | | |
|---|---|---|---|---|---|---|---|---|
| | jER (registered trademark) 828 | % by mass | | 22 | | | | |
| | SUMI-EPOXY (registered trademark) ELM434 | | | 41 | | | | |
| | SEIKACURE-S | | | 28 | | | | |
| | SUMIKAEXCEL (registered trademark) PES5003P | | | 9 | | | | |
| | F-a | | | | | 57 | | |
| | Araldite (registered trademark) MY0610 | | | | | 38 | | |
| | Virantage (registered trademark) VW10700RFP | | | | | 5 | | |
| | Compimide (registered trademark) MDAB | | | | | | | 39 |
| | Compimide (registered trademark) TDAB | | | | | | | 26 |
| | Compimide (registered trademark) TM124 | | | | | | | 32 |
| | Matrimid (registered trademark) 9725 | | | | | | | 2 |
| Proportion of (1) with respect to 100% by mass of total amount of (1) and (2) | | % by mass | 74% | 69% | 603, | 60% | 67% | 67% |
| Proportion of (2) with respect to 100% by mass of total amount of (1) and (2) | | | 26% | 31% | 40% | 40% | 33% | 33% |
| Reactivity of (1) and (2) | | | Present | Present | Present | Present | Present | Present |
| Miscibility of thermoplastic resin with (1) and (2) | | | Miscible | Miscible | Miscible | Miscible | Miscible | Miscible |
| Presence or absence of reaction product [B] | | | Absent | Absent | Absent | Absent | Absent | Absent |
| Mean width of roughness profile elements RSm (µm) of prepreg | | | 51 | 45 | 46 | 40 | 48 | 46 |
| Mean height of roughness profile elements Rc (pm) of prepreg | | | 15 | 22 | 20 | 24 | 21 | 22 |
| Welding temperature | | °C | 250 | 250 | 250 | 250 | 250 | 250 |
| Dimensional stability at the time of welding | | Determination | A | A | A | A | A | A |
| | | % | 2.0 | 0.3 | 2.1 | 0.3 | 2.3 | 0.3 |
| Tensile shear joint strength at 23°C | | Determination | A | A | A | A | A | A |
| | | MPa | 30.3 | 29.8 | 31.0 | 30.5 | 30.7 | 31.2 |

### DESCRIPTION OF REFERENCE SIGNS

- 1:: Hybrid prepreg
- 2:: Reinforcing fiber
- 3:: First thermoplastic resin layer
- 4:: Second thermoplastic resin layer or thermosetting resin layer
- 5:: Interface
- 6:: Fiber direction of reinforcing fibers
- 7:: Observed cross section
- 8:: Reference line
- 9:: Perpendicular baseline
- 10:: Cross section curve

## Claims

1. A prepreg comprising:
a thermoplastic resin layer containing reinforcing fibers and a thermoplastic resin,
wherein the thermoplastic resin layer is present on at least one surface of the prepreg, and the thermoplastic resin layer contains 65.0 to 99.5% by mass of a constituting unit of the thermoplastic resin and contains 0.5 to 35.0% by mass of a total amount of a constituting unit of a thermosetting resin and a constituting unit of a curing agent with respect to 100% by mass of a total amount of the constituting unit of the thermoplastic resin, the constituting unit of the thermosetting resin, and the constituting unit of the curing agent.

2. The prepreg according to claim 1, wherein the thermoplastic resin layer contains the constituting unit of the thermosetting resin and/or the constituting unit of the curing agent in the form of a reaction product [A] of a bifunctional or higher functional thermosetting resin monomer or prepolymer and a bifunctional or higher functional curing agent.

3. The prepreg according to claim 2, wherein the reaction product [A] is miscible with the thermoplastic resin.

4. The prepreg according to claim 2, wherein the reaction product [A] forms a semi-IPN structure or an IPN structure with the thermoplastic resin.

5. The prepreg according to claim 1, wherein the thermoplastic resin layer contains the constituting unit of the thermosetting resin and/or the constituting unit of the curing agent in the form of a reaction product [B] obtained by reacting the thermoplastic resin with a bifunctional or higher functional thermosetting resin monomer or prepolymer and/or a bifunctional or higher functional curing agent.

6. The prepreg according to claim 5, wherein the reaction product [B] is soluble in a solvent.

7. The prepreg according to claim 5, wherein the reaction product [B] has a crosslinked structure.

8. The prepreg according to claim 1, wherein the thermoplastic resin layer contains the constituting unit of the thermosetting resin and/or the constituting unit of the curing agent in the form of a bifunctional or higher functional thermosetting resin monomer or prepolymer and/or a bifunctional or higher functional curing agent.

9. The prepreg according to claim 8, wherein the bifunctional or higher functional thermosetting resin monomer or prepolymer and/or the bifunctional or higher functional curing agent are miscible with the thermoplastic resin.

10. The prepreg according to claim 8, wherein a molecular weight calculated from a structural formula of the bifunctional or higher functional thermosetting resin monomer or prepolymer and/or the bifunctional or higher functional curing agent, or a weight average molecular weight measured by gel permeation chromatography is 3000 g/mol or less.

11. The prepreg according to claim 8, wherein an increase of viscosity of the thermoplastic resin occurs due to the reaction of the bifunctional or higher functional thermosetting resin monomer or prepolymer and the bifunctional or higher functional curing agent.

12. The prepreg according to claim 11, wherein an increase of viscosity of the thermoplastic resin occurs due to heating of the prepreg.

13. The prepreg according to claim 12, wherein an increase of viscosity of the thermoplastic resin occurs during molding of a fiber-reinforced resin molded article.

14. The prepreg of claim 12, wherein an increase of viscosity of the thermoplastic resin occurs during preparation of an integrated product.

15. The prepreg according to claim 11, wherein at a temperature of a melting point of the thermoplastic resin +25°C (glass transition temperature +100°C when no melting point is shown), the viscosity of the thermoplastic resin after the increase of viscosity is 2 to 2000 times the viscosity of the thermoplastic resin before the increase of viscosity.

16. The prepreg according to claim 1, 2, 5, or 8, wherein the thermoplastic resin is a resin selected from the group consisting of polyamide, polysulfone, polyethersulfone, polyetherimide, polyarylene sulfide, polyetherketoneketone, and polyarylene etherketone.

17. The prepreg according to claim 1, 2, 5, or 8, wherein the entire region in the thickness direction of the prepreg is composed of the thermoplastic resin layer.

18. The prepreg according to claim 1, 2, 5, or 8, wherein the reinforcing fibers are carbon fibers.

19. The prepreg according to claim 1, 2, 5, or 8, containing 60.0 to 99.5% by mass of the constituting unit of the thermosetting resin and 0.5 to 40.0% by mass of the constituting unit of the curing agent with respect to 100% by mass of the total amount of the constituting unit of the thermosetting resin and the constituting unit of the curing agent.

20. The prepreg according to claim 2, 5, or 8, wherein the bifunctional or higher functional thermosetting resin monomer or prepolymer is at least one epoxy resin monomer or prepolymer.

21. The prepreg according to claim 2, 5, or 8, wherein the bifunctional or higher functional curing agent is a bifunctional or higher amine compound.

22. The prepreg according to claim 21, wherein the bifunctional or higher functional amine compound is an aromatic polyamine compound.

23. The prepreg according to claim 1, 2, 5, or 8, further comprising:
the thermoplastic resin layer; and
any one layer of
(1) a second thermoplastic resin layer containing reinforcing fibers and at least one type of thermoplastic resin having the constituting unit of a thermoplastic resin different from the thermoplastic resin, or
(2) a thermosetting resin layer containing reinforcing fibers and at least one type of thermosetting resin and/or a curing agent,
which are joined to the thermoplastic resin layer by forming an interface with the thermoplastic resin layer.

24. The prepreg according to claim 23, wherein in a cross section in the thickness direction, a cross section curve formed by the interface has a roughness average length RSm of 100 um or less, and a roughness average height Rc of 3.5 um or more, defined in JIS B0601 (2001).

25. The prepreg according to claim 24, wherein the thermosetting resin layer is a layer containing the bifunctional or higher functional epoxy resin monomer or prepolymer and the bifunctional or higher functional amine compound as main components.

26. A fiber-reinforced resin molded article obtained by molding a preform containing the prepreg according to claim 1, 2, 5 or 8.

27. A fiber-reinforced resin molded article obtained by molding a preform containing the prepreg according to claim 23.

28. The fiber-reinforced resin molded article according to claim 27, wherein
dimensional stability is 10% or less when welding the fiber-reinforced resin molded article by applying a pressure of 1 MPa at a temperature of the melting point of the thermoplastic resin +25°C (glass transition temperature +100°C when no melting point is indicated) and holding the fiber-reinforced resin molded article for 6 minutes
(Here, the dimensional stability at the time of welding refers to a rate of change in thickness before and after welding determined by (T1 + T2 - T3)/ (T1 + T2) × 100, where T1 and T2 are the mean thicknesses of the 2 fiber-reinforced resin molded bodies before welding, respectively, and T3 is the mean thickness of the integrated product after welding).

29. An integrated product wherein the fiber-reinforced resin molded article according to any one of claims 26 to 28 is welded to another member via the thermoplastic resin layer.
